# EUROPEAN PATENT SPECIFICATION

(11) **EP 3 982 669 B1**
(45) Date of publication and mention of the grant of the patent: **29.07.2026**
(21) Application number: 20834319.4
(22) Date of filing: 23.06.2020
(51) Int. Cl.: H04W 8/08, H04W 76/27, H04W 84/06, H04B 7/185, H04W 60/04

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 03.07.2019 CN 201910595226
(43) Date of publication of application: 13.04.2022
(73) Proprietor: Huawei Technologies Co., Ltd., Longgang District Shenzhen, Guangdong 518129 (CN)
(72) Inventor: MENG, Xian, Shenzhen, Guangdong 518129 (CN); QIAO, Yunfei, Shenzhen, Guangdong 518129 (CN)
(74) Representative: Pfenning, Meinig & Partner mbB
(86) International application number: PCT/CN2020/097614
(87) International publication number: WO 2021/000760

(56) References cited:
- WO-A1-2018/082490
- WO-A1-2018/126961
- WO-A1-2018/128020
- WO-A1-2018/228180
- US-A1- 2019 327 711
- HUAWEI ET AL: "Inactive state in NTN", vol. RAN WG2, no. Reno, US; 20190513 - 20190517, 13 May 2019 (2019-05-13), XP051731213, Retrieved from the Internet <URL:http://www.3gpp.org/ftp/Meetings%5F3GPP%5FSYNC/RAN2/Docs/R2%2D1907784%2Ezip> [retrieved on 20190513]
- CATT: "Considerations on NTN mobility", vol. RAN WG3, no. Athens, Greece; 20190225 - 20190301, 15 February 2019 (2019-02-15), pages 1 - 6, XP051604185, Retrieved from the Internet <URL:http://www.3gpp.org/ftp/tsg%5Fran/WG3%5FIu/TSGR3%5F103/Docs/R3%2D190242%2Ezip> [retrieved on 20190215]
- ZTE; SANECHIPS: "Discussion on Tracking Area Management in NTN", 3GPP DRAFT; R3-185610 DISCUSSION ON TRACKING AREA MANAGEMENT IN NTN, vol. RAN WG3, 201809029, Chengdu, China, pages 1 - 6, XP051528885

## Description

### TECHNICAL FIELD

This application relates to the field of communication technologies, and in particular, to a communication method and apparatus.

### BACKGROUND

A radio resource control (radio resource control, RRC) inactive state, which may also be referred to as an inactive state, is a terminal communication state newly defined in 5G. In the RRC inactive state, a core network, a base station, and a terminal all retain corresponding context information, but the terminal in the RRC inactive state does not feed back a channel quality status to a network side when moving within a radio access network (radio access network, RAN)-based notification area (RAN-based notification area, RNA), and needs to perform an RNA update after moving out of the RNA, to notify the network.

In a satellite communication scenario, a satellite may communicate with a terminal, a cell corresponding to the satellite may be referred to as a satellite cell, and an RNA may include one or more satellite cells. When the satellite moves relative to the ground, the RNA also moves with the satellite relative to the ground. Consequently, the RNA on the ground frequently changes. When the RNA frequently changes, an RNA obtained by a terminal in an inactive state through monitoring on the ground frequently changes, and therefore the terminal frequently performs an RNA update. This causes high power consumption of the terminal.

In addition, due to mobility of the satellite, when the terminal needs to switch from the RRC inactive state to an RRC connected state, a satellite newly accessed by the terminal is usually not a satellite (also referred to as a last serving satellite) connected to the terminal before the terminal enters the RRC inactive state. To establish a connection to the terminal, the newly accessed satellite needs to obtain a context of the terminal from the last serving satellite. A relatively long communication latency occurs because there is a specific communication distance between the newly accessed satellite and the last serving satellite.

HUAWEI ET AL: "Inactive state in NTN", 3GPP DRAFT; R2-1907784 INACTIVE STATE IN NTN, 3GPP, MOBILE COMPETENCE CENTRE; 650, ROUTE DES LUCIOLES; F-06921 SOPHIA-ANTIPOLIS CEDEX; FRANCE, vol. RAN WG2, no. Reno, US; 20190513 - 20190517, 13 May 2019 (2019-05-13), provides consideration on inactive state in NTN.

CATT: "Considerations on NTN mobility", 3GPP DRAFT; R3-190242, 3GPP, MOBILE COMPETENCE CENTRE; 650, ROUTE DES LUCIOLES; F-06921 SOPHIA-ANTIPOLIS CEDEX; FRANCE, vol. RAN WG3, no. Athens, Greece; 20190225 - 20190301, 15 February 2019 (2019-02-15), discusses NTN mobility aspects and provides proposals.

WO 2018/126921 A1 provides a communication method, to reduce time for a terminal to restore from an RRC inactive state to an RRC connected state.

### SUMMARY

In order to solve the above-mentioned problems, this application provides a communication method according to claim 1, a terminal according to claim 5, a communication method according to claim 6, a first network device according to claim 11, a communication method according to claim 12, a third network device according to claim 13, a computer-readable storage medium according to claim 14 and a computer program product according to claim 15, to provide, for a terminal in advance, a plurality of RNAs corresponding to different time periods, so that RNAs obtained by the terminal in an RRC inactive state through monitoring in a plurality of time periods can match RNAs pre-obtained by the terminal. This can reduce a quantity of RNA updates performed by the terminal and reduce power consumption of the terminal.

### BRIEF DESCRIPTION OF DRAWINGS

FIG. 1 is a schematic diagram of a structure of a communication system to which a communication method according to an embodiment of this application is applicable;
FIG. 2 is a schematic flowchart of a communication method;
FIG. 3(a) is a diagram of an example in a mobile satellite communication scenario;
FIG. 3(b) is a schematic diagram of RNA information;
FIG. 3(c) is a schematic diagram of RNA information;
FIG. 4 is a diagram of an example in a mobile satellite communication scenario according to an embodiment of this application;
FIG. 5(a) is a schematic flowchart of a communication method according to an embodiment of this application;
FIG. 5(b) is a schematic diagram of first information according to an embodiment of this application;
FIG. 5(c) is a schematic diagram of fourth information according to an embodiment of this application;
FIG. 6 is a schematic diagram of a process of transmitting context information of a terminal;
FIG. 7 is a schematic flowchart of a communication method;
FIG. 8 is a schematic diagram of a structure of a network device;
FIG. 9 is a schematic diagram of a structure of a terminal;
FIG. 10 is a schematic diagram of a structure of a terminal;
FIG. 11 is a schematic diagram of a structure of a network device;
FIG. 12 is a schematic diagram of a structure of a network device;
FIG. 13 is a schematic diagram of a structure of a terminal device;
FIG. 14 is a schematic diagram of a structure of a network device; and
FIG. 15 is a schematic diagram of a structure of a communication apparatus according to an embodiment of this application.

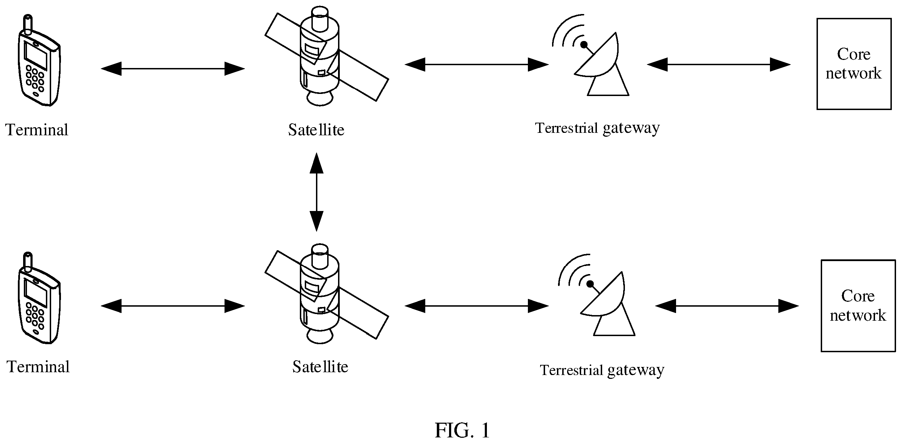

In the following, the embodiments of the invention are disclosed with particular reference to Figs. 1, 4, 5(a), 5(b), 5(c) and 15, while the other embodiments of the disclosure are provided for illustrative purposes to support a better understanding of the invention.

### DESCRIPTION OF EMBODIMENTS

Embodiments of this application provide a communication method, to reduce a quantity of RNA updates performed by a terminal and reduce power consumption of the terminal.

For ease of understanding technical solutions in the embodiments of this application, before the technical solutions provided in the embodiments of this application are described, related terms, an applicable communication system, a network device, and a terminal in this application are first described.

In this specification, claims, and the accompanying drawings of this application, the terms "first", "second", and the like are intended to distinguish between similar objects but not necessarily to indicate a specific order or sequence. It should be understood that the terms used in such a way are interchangeable in proper circumstances, and this is merely a discrimination manner of describing objects having a same attribute in the embodiments of this application. Sometimes "first" and "second" may indicate a same object or different objects. In addition, the terms "include", "have", and any variant thereof are intended to cover the non-exclusive inclusion, so that a process, method, system, product, or device that includes a series of units is not necessarily limited to those units, but may include other units not expressly listed or inherent to such a process, method, product, or device.

The technical solutions in the embodiments of this application may be applied to various communication systems for data processing, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency division multiple access, OFDMA) system, a single-carrier frequency division multiple access (single-carrier FDMA, SC-FDMA) system, and another system. The terms "system" and "network" can be interchanged with each other. The CDMA system may implement wireless technologies such as universal terrestrial radio access (universal terrestrial radio access, UTRA) and CDMA2000. UTRA may include a wideband CDMA (wideband CDMA, WCDMA) technology and another variation technology of CDMA. CDMA2000 may cover the interim standard (interim standard, IS) 2000 (IS-2000), the IS-95, and the IS-856. The TDMA system may implement wireless technologies such as global system for mobile communications (global system for mobile communications, GSM). The OFDMA system may implement wireless technologies such as evolved universal terrestrial radio access (evolved UTRA, E-UTRA), ultra mobile broadband (ultra mobile broadband, UMB), IEEE 802.11 (Wi-Fi), IEEE 802.16 (WiMAX), IEEE 802.20, and Flash OFDMA. UTRA corresponds to UMTS, and E-UTRA corresponds to an evolved version of UMTS. 3GPP long term evolution (long term evolution, LTE) and various versions evolved based on LTE are new versions of UMTS using E-UTRA. A 5th generation (5th generation, 5G) communication system or new radio (new radio, NR) is a next generation communication system under research. In addition, the communication systems may be further applied to a future-oriented communication technology, and the technical solutions provided in the embodiments of this application are applicable to all the communication systems. A system architecture and a service scenario that are described in the embodiments of this application are intended to describe the technical solutions in the embodiments of this application more clearly, and do not constitute a limitation on the technical solutions provided in the embodiments of this application. A person of ordinary skill in the art may know that with evolution of a network architecture and emergence of a new service scenario, the technical solutions provided in the embodiments of this application are also applicable to similar technical problems.

FIG. 1 is a schematic diagram of a structure of a communication system to which a communication method according to an embodiment of this application is applicable. As shown in FIG. 1, the communication system includes a terminal, a satellite, a ground station, and a core network. The terminal is connected to the satellite, and the satellite is connected via the ground station to the core network deployed on the ground. An NG interface exists between the satellite and the core network, and can implement a connection between the satellite and the core network. An inter-satellite link exists between satellites, and can implement a connection between the satellites through an Xn interface.

The terminal is also referred to as user equipment (user equipment, UE), a mobile station (mobile station, MS), a mobile terminal (mobile terminal, MT), a terminal device, or the like, and is a device that provides voice and/or data connectivity for a user or a chip disposed in the device, for example, a wireless connection power available handheld device or vehicle-mounted device. The terminal may include but is not limited to a handheld device, a vehicle-mounted device, a wearable device, or a computing device that has a wireless communication function, another processing device connected to a wireless modem, a mobile phone (mobile phone), a tablet computer, a notebook computer, a palmtop computer, a mobile internet device (mobile internet device, MID), a machine type communication terminal, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), and the like.

A base station is deployed on the satellite, and the satellite can provide a radio access service, schedule a radio resource to an access terminal, provide a reliable wireless transmission protocol and data encryption protocol, and so on.

The ground station is deployed on the ground and is responsible for forwarding signaling and service data exchanged between the satellite and the core network.

The core network is configured to provide a user connection, manage a user, and provide a bearer for a service. For example, establishment of the user connection includes functions such as mobility management (mobile management, MM) and paging (paging). The core network may include a plurality of core network devices. For example, the core network device may be an access and mobility management function (access and mobility management function, AMF) that is mainly responsible for signaling processing, namely, control plane functions such as access control, mobility management, attachment and detachment, and gateway selection. The core network device involved in the embodiments of this application is not limited to the AMF.

The communication system shown in FIG. 1 may be a base station access system of a 2G network (to be specific, a RAN includes a base station and a base station controller), may be a base station access system of a 3G network (to be specific, a RAN includes a base station and an RNC), may be a base station access system of a 4G network (to be specific, a RAN includes an eNB and an RNC), or may be a base station access system of a 5G network. The RAN includes one or more network devices. The network device may be any device having a wireless transceiver function or a chip disposed in the device having the wireless transceiver function. The network device includes but is not limited to a base station (for example, a base station (BS), a NodeB (NodeB), an evolved NodeB (eNodeB or eNB), a gNodeB (gNB) in a fifth generation 5G communication system, a base station in a future communication system, an access node in a Wi-Fi system, a wireless relay node, or a wireless backhaul node) and the like. The base station may be a macro base station, a micro base station, a picocell base station, a small cell, a relay station, or the like. A plurality of base stations may support a network using the foregoing one or more technologies or a future evolved network. The core network may support a network using the foregoing one or more technologies or a future evolved network. The base station may include one or more co-site or non-co-site transmission reception points (transmission reception points, TRPs). The network device may alternatively be a radio controller, a centralized unit (centralized unit, CU), a distributed unit (distributed unit, DU), or the like in a cloud radio access network (cloud radio access network, CRAN) scenario. The network device may alternatively be a server, a wearable device, a vehicle-mounted device, or the like. An example in which the network device is a base station is used for description below. The plurality of network devices may be base stations of a same type or base stations of different types. The base station may communicate with a terminal device, or may communicate with the terminal device through a relay station. The terminal device may support communication with a plurality of base stations using different technologies. For example, the terminal device may support communication with a base station supporting an LTE network, may support communication with a base station supporting a 5G network, or may support a dual connection to the base station supporting the LTE network and the base station supporting the 5G network. For example, the terminal is connected to a RAN node of a wireless network. Currently, some examples of the RAN node are: a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may include a centralized unit (centralized unit, CU) node or a distributed unit (distributed unit, DU) node, or may be a RAN device including a CU node and a DU node.

It should be understood that descriptions are provided in FIG. 1 by using satellite communication as an example, and the technical solutions provided in the embodiments of this application may be certainly applied to another communication system. The communication system shown in FIG. 1 may alternatively be a mobile satellite communication system in satellite communication. A network device in the mobile satellite communication system includes but is not limited to a non-geostationary earth orbit (non-geostationary earth orbit, NGEO) communication satellite, a base station deployed on the NGEO communication satellite, a device having a wireless transceiver function in the NGEO communication satellite, or a chip disposed in the device having the wireless transceiver function in the NGEO communication satellite.

A mobile satellite communication system in a 5G network is used as an example. Currently, a satellite broadcasts, in a coverage area of the satellite, an RNA corresponding to the coverage area. RNAs broadcast in coverage areas of different satellites may be different. Due to mobility of the satellite, the coverage area of the satellite moves relative to a terminal, that is, an RNA obtained by the terminal through monitoring changes. After the terminal enters an RRC inactive state with relatively low power consumption, if the RNA obtained by the terminal through monitoring changes, the terminal needs to switch from the RRC inactive state to an RRC connected state to perform an RNA update. When the terminal is basically stationary, the terminal usually needs to frequently perform an RNA update due to the mobility of the satellite. This causes high power consumption of the terminal.

Considering the foregoing problem, the embodiments of this application provide a communication method, to resolve the foregoing technical problem. The following uses the communication system shown in FIG. 1 as an example to describe the technical solutions in the embodiments of this application in detail by using some embodiments. The following several embodiments may be combined with each other, and a same or similar concept or process may not be described again in some embodiments.

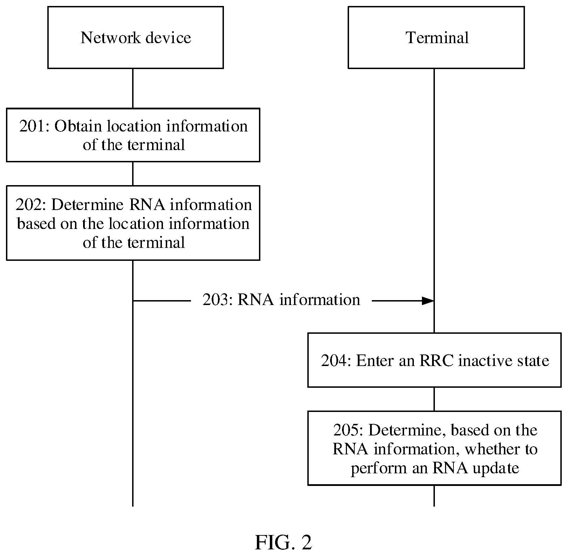

FIG. 2 is a schematic flowchart of a communication method. As shown in FIG. 2, the method may include the following steps.

201: A network device obtains location information of a terminal.

When the network device needs to indicate the terminal to enter an RRC inactive state, the network device may obtain current location information of the terminal, so that the network device can determine, based on the location information of the terminal, an RNA that may be obtained by the terminal through monitoring after the terminal enters the RRC inactive state.

Specifically, the network device may calculate a distance between the terminal and the network device by measuring a strength value of an uplink signal sent by the terminal, to obtain the location information of the terminal. Alternatively, after the terminal performs GPS-based positioning or other positioning, the terminal sends the location information to the network device, so that the network device can obtain the location information of the terminal. It may be understood that manners in which the network device obtains the location information of the terminal may include but are not limited to the foregoing manners, and the network device may alternatively obtain the location information of the terminal in another manner. This is not specifically limited herein.

202: The network device determines RNA information based on the location information of the terminal, where the RNA information is used to indicate RNAs corresponding to the terminal in different time periods.

Specifically, in a mobile satellite communication scenario, the network device may determine, based on ephemeris information and the location information of the terminal, an RNA corresponding to a location of the terminal in a period of time after the terminal enters the RRC inactive state.

The ephemeris information is a parameter indicating revolution of a satellite in an orbit, namely, a precise location or trajectory table that changes with time in a revolution process of the satellite, and can indicate predicted locations of the satellite at different time points. Due to mobility of the satellite, a coverage area of the satellite is also moving relative to the ground. For a fixed location on the ground, coverage areas of different satellites pass through the location in different time periods.

Because the ephemeris information can indicate predicted locations of a satellite at different time points, locations on the ground that correspond to coverage areas of the satellite at different time points can be derived based on the ephemeris information. That is, for a location on the ground, information about a satellite whose coverage area passes through the location within a period of time may be derived.

It should be noted that an RNA may include a coverage area corresponding to one satellite, in other words, a coverage area of one satellite corresponds to one RNA; an RNA may include coverage areas corresponding to a plurality of satellites, in other words, coverage areas of a plurality of satellites jointly form one RNA; or a coverage area of one satellite may include a plurality of RNAs, in other words, a plurality of RNAs form a coverage area of one satellite.

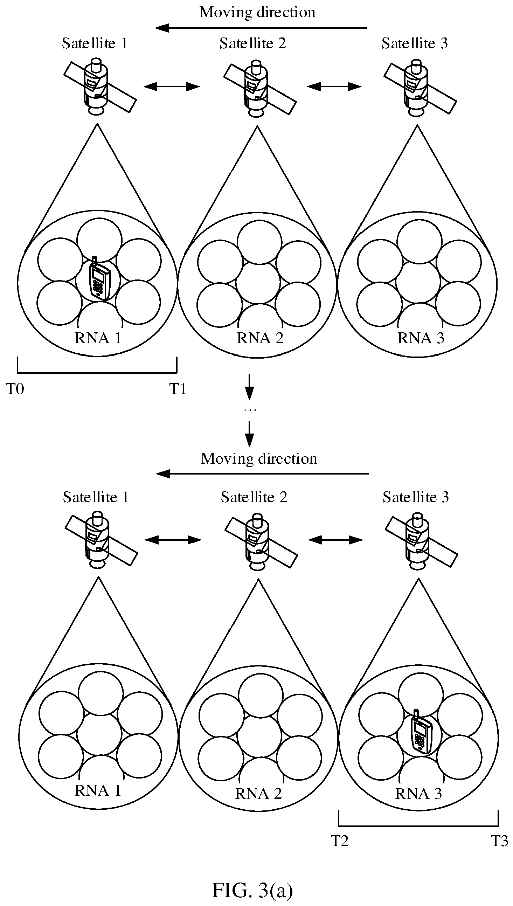

Specifically, refer to FIG. 3(a). FIG. 3(a) is a diagram of an example in a mobile satellite communication scenario. As shown in FIG. 3(a), when a terminal is basically stationary, for a satellite 1 to a satellite 3 in a same orbit, assuming that the satellite 1 to the satellite 3 move from right to left, a coverage area of the satellite 1 passes through a location of the terminal in a time period TO to T1, a coverage area of the satellite 2 passes through the location of the terminal in a time period T1 to T2, and a coverage area of the satellite 3 passes through the location of the terminal in a time period T2 to T3. In addition, if an RNA corresponding to the coverage area of the satellite 1 is an RNA 1, an RNA corresponding to the coverage area of the satellite 2 is an RNA 2, and an RNA corresponding to the coverage area of the satellite 3 is an RNA 3, RNAs corresponding to the location of the terminal in the three time periods TO to T1, T1 to T2, and T2 to T3 are respectively the RNA 1, the RNA 2, and the RNA 3.

It should be understood that descriptions are provided in FIG. 3(a) by using an example in which one RNA corresponds to a coverage area of one satellite. In an actual application, one RNA may alternatively correspond to coverage areas of a plurality of satellites. For example, using the satellite 1 to the satellite 3 in FIG. 3(a) as an example, if an RNA corresponding to the coverage areas of the satellite 1 and the satellite 2 is the RNA 1, and an RNA corresponding to the coverage area of the satellite 3 is the RNA 2, an RNA corresponding to the location of the terminal in a time period TO to T2 is the RNA 1, and an RNA corresponding to the location of the terminal in the time period T2 to T3 is the RNA 2.

Therefore, in an actual application, after a correspondence between a coverage area of a satellite and an RNA is determined, an RNA that may be obtained by the terminal through monitoring in a specific time period can be determined based on the ephemeris information and the location of the terminal.

Specifically, the RNA may be configured in the following two manners:
In a first configuration manner, the RNA is configured by using a cell list. This is specifically as follows:
The satellite provides the terminal with a definite cell list as the RNA, in other words, different cell lists are used to indicate different RNAs. A cell list indicating one RNA may include one or more cells. For example, a cell 0 to a cell 6 represent an RNA, and a cell 7 to a cell 13 represent another RNA, where the cell 0 to the cell 6 and the cell 7 to the cell 13 are two different cell lists and used to represent different RNAs.

In a second configuration manner, the RNA is configured by using an RNA identifier. This is specifically as follows:
The satellite provides the terminal with the RNA identifier as the RNA, in other words, different RNA identifiers are used to indicate different RNAs. For example, an RNA 1 represents an RNA, and an RNA 2 represents another RNA, where the RNA 1 and the RNA 2 are different RNA identifiers and used to represent different RNAs.

In addition, due to the mobility of the satellite, the coverage area of the satellite is moving relative to the ground, and the RNA is deployed relative to the ground in the following two manners:
In a first deployment manner, the RNA is dynamically deployed relative to the ground. This is specifically as follows:
The RNA is dynamic relative to the ground, that is, the RNA moves with the coverage area of the satellite, and the RNA is static relative to the coverage area of the satellite.

In the deployment manner in which the RNA is dynamic relative to the ground, a location on the ground may correspond to different RNAs in different time periods. For example, an RNA corresponding to the location in a time period is the cell 0 to the cell 6 or the RNA 1, and an RNA corresponding to the location in another time period is the cell 7 to the cell 13 or the RNA 2.

In a second deployment manner, the RNA is statically deployed relative to the ground. This is specifically as follows:
The RNA is static relative to the ground, that is, a specific region on the ground corresponds to a fixed RNA.

In the deployment manner in which the RNA is static relative to the ground, a location on the ground corresponds to a fixed RNA. For example, RNAs corresponding to the location in different time periods are all the RNA 1. However, in the configuration manner in which the RNA is indicated by using the cell list, a cell list used to indicate the RNA corresponding to the location also changes with time due to the mobility of the satellite. For example, an RNA corresponding to the location in a time period is the cell 0 to the cell 6, and an RNA corresponding to the location in another time period is the cell 7 to the cell 13. That is, when the RNA is configured by using the cell list, the cell list used to indicate the RNA corresponding to the location changes with time. When the RNA is configured by using an RNA identifier, the RNA identifier used to indicate the RNA corresponding to the location does not change with time.

Therefore, when the RNA is dynamically deployed relative to the ground, using the mobile satellite communication scenario shown in FIG. 3(a) as an example, and assuming that the satellite 1 is a network device connected to the terminal before the terminal enters the RRC inactive state, the satellite 1 may determine the RNA information based on the location information of the terminal. The RNA information is specifically as follows:
1. The RNA information includes a time period and cell information corresponding to the time period, where the RNA information may include one or more time periods, each time period has cell information corresponding to the time period, and the cell information corresponding to the time period indicates one or more cells located within an RNA coverage area in the time period.

Specifically, the RNA information may be indicated by using Table 1:

**Table 1**

| Time period | RNA |
|---|---|
| T0 to T1 | Cell 0 to cell 6 |
| T1 to T2 | Cell 7 to cell 13 |
| T2 to T3 | Cell 14 to cell 20 |

2. The RNA information includes a time period and an RNA identifier corresponding to the time period, where the RNA information may include one or more time periods, and each time period has an RNA identifier corresponding to the time period.

Specifically, the RNA information may be indicated by using Table 2:

**Table 2**

| Time period | RNA |
|---|---|
| T0 to T1 | RNA 1 |
| T1 to T2 | RNA 2 |
| T2 to T3 | RNA 3 |

As shown in Table 1 and Table 2, in the RNA information, each time period corresponds to one cell list or RNA identifier.

In addition, when the RNA information includes a plurality of time periods, RNAs corresponding to different time periods in the RNA information may be configured in different manners, that is, RNAs corresponding to different time periods may be indicated by using a cell list or an RNA identifier.

Specifically, the RNA information may alternatively be indicated by using Table 3:

**Table 3**

| Time period | RNA |
|---|---|
| T0 to T1 | Cell 0 to cell 6 |
| T1 to T2 | RNA 2 |
| T2 to T3 | Cell 14 to cell 20 |

It may be understood that the RNA information in Table 1 to Table 3 indicates RNAs corresponding to the three time periods: T0 to T1, T1 to T2, and T2 to T3. In an actual application, the RNA information determined by the network device may include one or more time periods, and a length of each time period may also be determined based on a specific revolution status of the satellite. This is not specifically limited herein.

When the RNA is statically deployed relative to the ground, still using the mobile satellite communication scenario shown in FIG. 3(a) as an example, and assuming that the satellite 1 is a network device connected to the terminal before the terminal enters the RRC inactive state, the satellite 1 may determine the RNA information based on the location information of the terminal. The RNA information is specifically as follows:
a. The RNA information includes a time period and cell information corresponding to the time period.
   When the RNA is configured by using the cell list, the determined RNA information may be the same regardless of whether the RNA is dynamically or statically deployed relative to the ground. For details, refer to the foregoing descriptions and the content in Table 1. The details are not described herein again.
b. The RNA information includes an RNA identifier.

When the RNA is static relative to the ground, the RNA corresponding to the location of the terminal remains unchanged, that is, the RNA identifier is fixed. Therefore, in this case, the RNA information only needs to include the RNA identifier. For example, the RNA information only includes one RNA identifier: the RNA 1.

203: The network device sends the RNA information to the terminal.

Specifically, the network device may include the RNA information in an RRC release (RRCRelease) message, to send the RNA information to the terminal, where the RRC release message carries a suspend configuration (suspendConfig) field, used to indicate the terminal to enter the RRC inactive state. Specifically, the suspendConfig field carries content such as an inactive-radio network temporary identifier (Inactive-Radio Network Temporary Identifier, I-RNTI), RAN-based notification area information (NotificationAreaInfo), a RAN paging (paging) periodicity, and a timer, to implement processes such as paging and an RNA update of the terminal. Optionally, a manner in which the network device sends the RNA information includes but is not limited to including the RNA information in the RRC release message to send the RNA information. Alternatively, the network device may send the RNA information in another manner, for example, may separately send the RNA information to the terminal. This is not specifically limited herein.

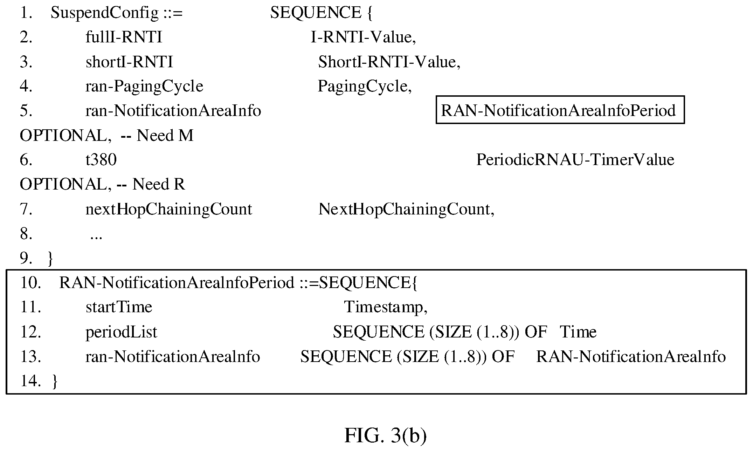

Specifically, when the RNA is dynamic relative to the ground, the RNA information sent by the network device to the terminal may be indicated by using a field shown in FIG. 3(b). FIG. 3(b) is a schematic diagram of RNA information. A part in a block in FIG. 3(b) is a part obtained by improving a conventional suspendConfig field in this embodiment of this application. In FIG. 3(b), a field on the left represents a name of the field, and a field on the right represents content corresponding to the field. It can be learned that content of a field on the right in line 5 is obtained through improvement, and the content is "RAN-NotificationAreaInfoPeriod", namely, RAN-NotificationAreaInfo with a time period. In lines 10 to 14, the content of the field is defined, that is, the field "RAN-NotificationAreaInfoPeriod" includes: a start time (startTime), a time period list (periodList), and RAN-NotificationAreaInfo. Field content Timestamp corresponding to the field startTime indicates a specific timestamp, for example, 10:00. Field content SEQUENCE (SIZE (1..8)) OF Time corresponding to the field periodList indicates a specific time period, for example, 10 minutes, 10 minutes, ..., and 10 minutes, where SIZE (1..8) indicates that a quantity of time periods is 8. Field content SEQUENCE (SIZE (1..8)) OF RAN-NotificationAreaInfo corresponding to the field RAN-NotificationAreaInfo indicates a specific RNA, for example, a cell 0 to a cell 6, a cell 7 to a cell 14, an RNA 3, and an RNA 4. In other words, the time period in the RNA information and the RNA corresponding to the time period are indicated by using the foregoing three fields.

It should be noted that in the RNA information shown in FIG. 3(b), the start time and a plurality of time periods that indicate only time lengths are used to indicate the time period with explicit time information in the RNA information. For example, the start time is 10:00, and the plurality of time periods that indicate only the time lengths are 10 minutes, 10 minutes, 10 minutes, and 10 minutes. In this case, the corresponding time period with explicit time information is: 10:00 to 10:10, 10:10 to 10:20, 10:20 to 10:30, and 10:30 to 10:40. It is clear that in the field-based indication manner shown in FIG. 3(b), a data amount of the field content can be reduced, thereby reducing resource consumption for sending the RNA information to the terminal by the network device.

It should be understood that in the suspendConfig field, in addition to the field-based indication manner shown in FIG. 3(b), another field-based indication manner may alternatively be used to indicate the time period and the RNA corresponding to the time period. For example, field content directly carries a time period carrying explicit time information, for example, 10:00 to 10:10, 10:10 to 10:20, 10:20 to 10:30, and 10:30 to 10:40. A field-based indication manner is not limited herein.

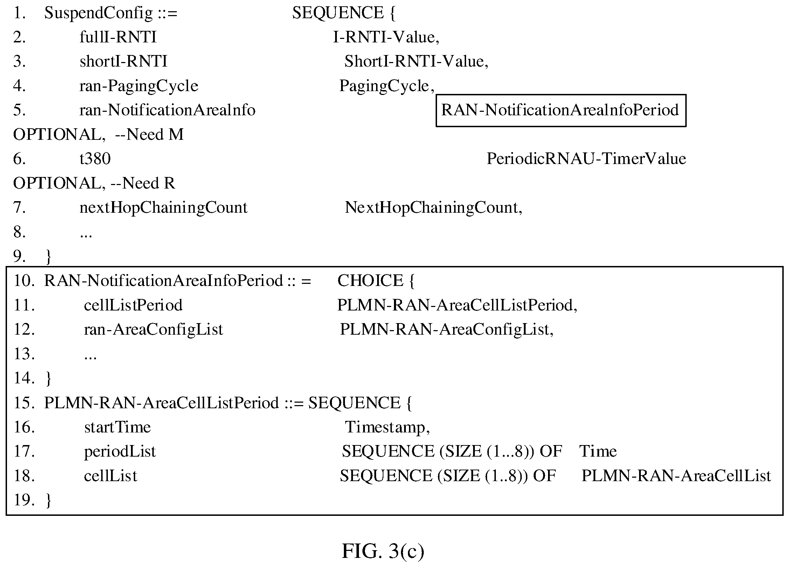

In addition, when the RNA is static relative to the ground, the RNA information sent by the network device to the terminal may be indicated by using a field shown in FIG. 3(c). FIG. 3(c) is a schematic diagram of RNA information. A part in a block in FIG. 3(c) is a part obtained by improving a conventional suspendConfig field in this embodiment of this application. Similarly, in FIG. 3(c), a field on the left represents a name of the field, and a field on the right represents content corresponding to the field. It can be learned that content of a field on the right in line 5 is obtained through improvement, and the content is "RAN-NotificationAreaInfoPeriod", namely, RAN-NotificationAreaInfo with a time period. In lines 10 to 14, the content of the field is defined, that is, the field "RAN-NotificationAreaInfoPeriod" includes: a cell list with a time period (cellListPeriod) and a RAN area configuration list (ran-AreaConfigList). Field content PLMN-RAN-AreaCellListPeriod corresponding to the field cellListPeriod is specifically defined in lines 15 to 18. Field content PLMN-RAN-AreaConfigList corresponding to the field periodList indicates a specific RNA identifier list, namely, RNA identifiers such as an RNA 1 and an RNA 2. Refer to lines 15 to 18. The field content PLMN-RAN-AreaCellListPeriod includes a start time, a time period list, and a cell list. For the start time and the time period list, refer to the foregoing descriptions, and details are not described herein again. The cell list is a cell list, for example, a cell 0 to a cell 6 and a cell 7 to a cell 14, that corresponds to each time period and that is used to represent an RNA.

That is, when the RNA is static relative to the ground, the RNA information may be indicated in two manners: including the cell list with the time period in the suspendConfig field, or including a fixed RNA identifier in the suspendConfig field.

It may be understood that the RRC release message sent by the network device to the terminal usually includes the timer, where the timer is used to indicate the terminal to perform an RNA update after the timer expires. That is, after the timer expires, the terminal needs to perform an RNA update regardless of whether the RNA obtained by the terminal through monitoring matches the RNA in the RNA information.

Therefore, when determining the RNA information, the network device may determine, based on timing duration of the timer, total duration of all the time periods included in the RNA information, so that the total duration of all the time periods is as approximate as possible to the timing duration of the timer. In this way, a data amount of the RNA information can be reduced while a quantity of RNA updates performed by the terminal is reduced as much as possible.

204: The terminal enters the RRC inactive state.

Specifically, when the network device includes the RNA information in the RRC release message to send the RNA information to the terminal, the terminal may enter the RRC inactive state based on an indication by the RRC release message after receiving the RRC release message. In addition, the terminal may obtain the RNA information in the RRC release message by parsing the RRC release message.

205: The terminal determines, based on the RNA information, whether to perform an RNA update.

After the terminal enters the RRC inactive state, the terminal monitors an RNA that is broadcast in a cell in which the terminal is located, and then determines, by comparing an RNA obtained through monitoring with the received RNA information, whether the RNA update needs to be performed.

Specifically, after obtaining, through monitoring, the RNA that is broadcast in the cell in which the terminal is located, the terminal determines, based on the time period included in the RNA information, a time period that is in the RNA information and in which a current time point falls, and then compares whether an RNA corresponding to the time period is consistent with the RNA obtained through monitoring. If the RNA corresponding to the time period is consistent with the RNA obtained through monitoring, the terminal does not need to perform an RNA update. If the RNA corresponding to the time period is inconsistent with the RNA obtained through monitoring, the terminal needs to perform an RNA update.

The scenario shown in FIG. 3(a) is used as an example. In the time period T1 to T2, the coverage area of the satellite 1 has left the location of the terminal, and the terminal is within the coverage area of the satellite 2. In this case, an RNA obtained by the terminal through monitoring is the cell 7 to the cell 13 or the RNA 2, and an RNA obtained by the terminal by querying the RNA information based on the current time point is also the cell 7 to the cell 13 or the RNA 2. It is clear that the RNA obtained by the terminal through monitoring is consistent with the RNA obtained by the terminal by querying the RNA information based on the current time point, and the terminal does not need to perform an RNA update. Similarly, in the time period T2 to T3, the terminal is within the coverage area of the satellite 3, an RNA obtained by the terminal through monitoring is also consistent with an RNA obtained by the terminal by querying in the RNA information, and the terminal does not need to perform an RNA update either.

It may be understood that when the terminal is basically stationary, the RNA obtained by the terminal through monitoring is consistent with the RNA obtained by the terminal by querying the RNA information based on the current time point. That is, when the RNA information includes one or more time periods, the terminal does not need to perform an RNA update in any of these time periods. This means that the terminal may be always in the power-saving RRC inactive state, and does not need to frequently switch to an RRC connected state to perform an RNA update, so that the quantity of RNA updates performed by the terminal and power consumption of the terminal are reduced.

In addition, when the location of the terminal moves, for example, the terminal moves to the coverage area of the satellite 3 at a time point in the time period T1 to T2, an RNA obtained by the terminal through monitoring is the cell 14 to the cell 20 or the RNA 3 that are/is broadcast by the satellite 3, but an RNA that corresponds to the current time period and that is in the RNA information is the cell 7 to the cell 13 or the RNA 2, in other words, the RNA obtained by the terminal through monitoring is inconsistent with the RNA obtained by the terminal by querying the RNA information, and the terminal needs to perform an RNA update.

It should be understood that after duration of the RNA information elapses, in other words, the current time point is beyond all the time periods included in the RNA information, the terminal also needs to perform an RNA update. For example, the RNA information includes the three time periods, namely, T0 to T1, T1 to T2, and T2 to T3. If the current time point is T4, and T4 is not within a range of any one of the three time periods, the terminal also needs to perform an RNA update.

In this embodiment of this application, the network device sends the RNA information to the terminal, where the RNA information includes the RNAs corresponding to the terminal in different time periods, so that a plurality of RNAs obtained by the terminal through monitoring in different time periods can match RNAs in the RNA information. This reduces the quantity of RNA updates performed by the terminal and reduces the power consumption of the terminal.

It should be noted that in this embodiment of this application, a satellite cell broadcasts a cell identifier and an RNA identifier of the satellite cell by using system information of the satellite cell. In a moving process of the satellite, a cell identifier that is broadcast by a same satellite cell is fixed. When the RNA is statically deployed relative to the ground, the satellite cell adjusts, based on a moving status of the satellite, an RNA identifier that is broadcast by the satellite cell. Specifically, because the satellite revolves in an orbit according to a specific rule, the satellite cell may obtain a coverage location of the satellite cell on the ground based on current time information or current location information of the satellite, to adjust the broadcast RNA identifier.

In the mobile satellite communication scenario, due to the mobility of the satellite, when the terminal needs to switch from the RRC inactive state to the RRC connected state, a satellite newly accessed by the terminal is usually not a satellite (namely, a last serving satellite) connected to the terminal before the terminal enters the RRC inactive state. To establish a connection to the terminal, the newly accessed satellite needs to obtain context information of the terminal from the last serving satellite. When there is a specific communication distance between the newly accessed satellite and the last serving satellite, for example, when there is one or more satellites between the newly accessed satellite and the last serving satellite, a relatively long communication latency occurs due to a relatively long communication distance.

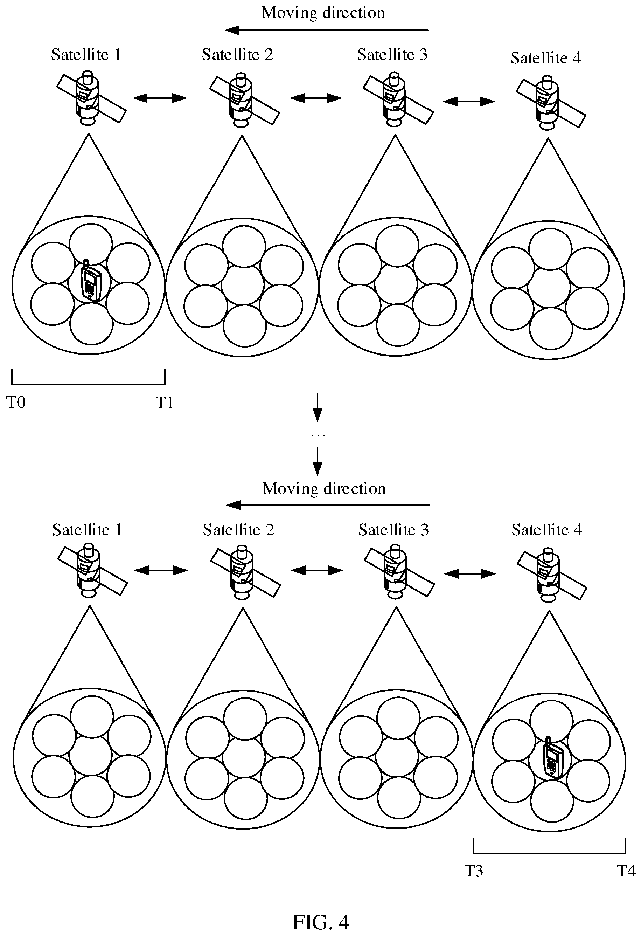

Specifically, refer to FIG. 4. FIG. 4 is a diagram of an example in a mobile satellite communication scenario according to an embodiment of this application. As shown in FIG. 4, when a terminal is basically stationary, for a satellite 1 to a satellite 4 in a same orbit, assuming that the satellite 1 to the satellite 4 move from right to left, correspondingly, the terminal is respectively located within coverage areas of the satellite 1, the satellite 2, the satellite 3, and the satellite 4 in time periods T0 to T1, T1 to T2, T2 to T3, and T3 to T4. If the terminal enters an RRC inactive state in the time period T0 to T1, the satellite 1 is a satellite that last serves the terminal, and context information of the terminal is stored in the satellite 1. When the terminal needs to switch from the RRC inactive state to an RRC connected state in the time period T2 to T3, the terminal is located within the coverage area of the satellite 3, and the satellite 3 receives a connection request of the terminal. Because the context information of the terminal is stored in the satellite 1 in the time period, the satellite 3 needs to request the context information of the terminal from the satellite 1. The satellite 3 can establish a communication connection to the terminal only after the satellite 1 sends the context information of the terminal to the satellite 3. It can be learned that even if the terminal remains stationary, due to movement of the satellites, there is a specific communication distance between the satellite 1 that stores the context information of the terminal and the satellite 3 newly accessed by the terminal. This causes a relatively long transmission latency. Consequently, it takes a specific time period for the terminal to establish the communication connection to the satellite 3.

Considering the foregoing problem, the embodiments of this application provide a communication method, to resolve the foregoing technical problem. The following uses the communication system shown in FIG. 1 as an example to describe the technical solutions in the embodiments of this application in detail by using some embodiments. The following several embodiments may be combined with each other, and a same or similar concept or process may not be described again in some embodiments.

In the embodiments of this application, after a terminal enters an RRC inactive state, a network device that last serves the terminal transmits context information of the terminal to another network device according to a specific rule, so that a network device that stores the context information of the terminal is as close as possible to a network device newly accessed by the terminal. This reduces a latency for obtaining the context information of the terminal by the network device newly accessed by the terminal, and further reduces a latency for the terminal to switch from the RRC inactive state to an RRC connected state.

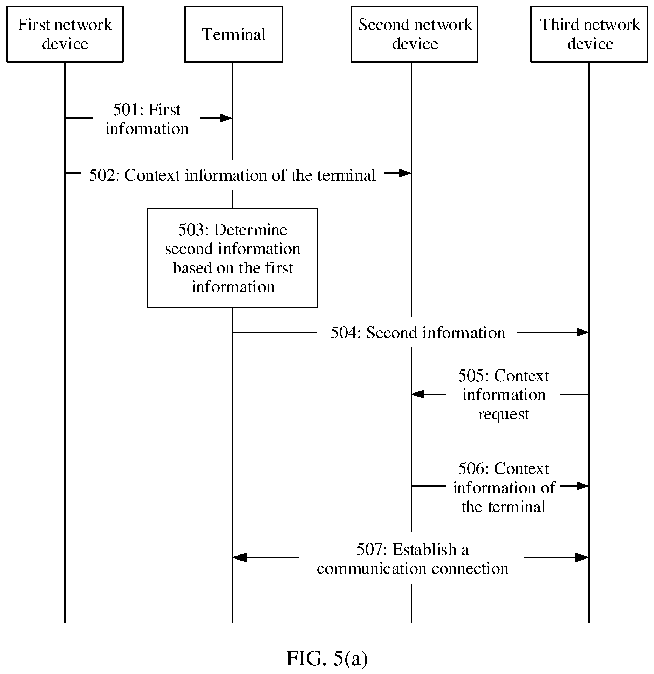

FIG. 5(a) is a schematic flowchart of a communication method according to an embodiment of this application. As shown in FIG. 5(a), the method includes the following steps.

501: A first network device sends first information to a terminal.

A mobile satellite communication scenario is used as an example. A satellite that is last connected to the terminal before the terminal enters an RRC inactive state (referred to as a last serving satellite for short below, namely, the first network device) sends the first information to the terminal, where the first information is mainly used to enable a satellite newly accessed by the terminal (referred to as a newly accessed satellite for short below, namely, a third network device) to determine a satellite (namely, a second network device) that stores context information of the terminal, to ensure that the newly accessed satellite can obtain the context information of the terminal from a satellite closer to the newly accessed satellite.

Specifically, for content included in the first information, there are at least the following two cases:
Case 1: The first information includes a time period and a network device identifier corresponding to the time period, where the first information may include one or more time periods, each time period corresponds to a network device identifier, and the network device identifier corresponding to the time period indicates a network device that stores the context information of the terminal in the time period. Case 1 is not according to the invention.

It may be understood that the last serving satellite may determine, based on ephemeris information, satellites whose coverage areas may pass through a current location of the terminal after the terminal enters the RRC inactive state, in other words, the satellites determined by the last serving satellite may include the newly accessed satellite. In this way, the last serving satellite may enable the context information of the terminal to be transmitted among the satellites determined by the last serving satellite, so that the satellite that finally stores the context information of the terminal can be as close as possible to the newly accessed satellite.

FIG. 4 is used as an example. Assuming that a satellite 1 is the last serving satellite, the satellite 1 may determine that coverage areas of a satellite 2 to a satellite 4 may all pass through a current location of a terminal after the terminal enters an RRC inactive state. Therefore, the satellite 1 may enable context information of the terminal to be transmitted among the satellite 2 to the satellite 4. Specifically, the first information may be indicated by using Table 4 or Table 5.

**Table 4**

| Time period | I-RNTI |
|---|---|
| T0 to T1 | ID of the terminal + ID of the satellite 1 |
| T1 to T2 | ID of the terminal + ID of the satellite 2 |
| T2 to T3 | ID of the terminal + ID of the satellite 3 |
| T3 to T4 | ID of the terminal + ID of the satellite 4 |

**Table 5**

| Time period | I-RNTI |
|---|---|
| T0 to T1 | ID of the terminal + ID of a base station 1 |
| T1 to T2 | ID of the terminal + ID of a base station 2 |
| T2 to T3 | ID of the terminal + ID of a base station 3 |
| T3 to T4 | ID of the terminal + ID of a base station 4 |

"+" in Table 4 indicates a combination of an ID of the terminal and an ID of a satellite, and "+" in Table 5 indicates a combination of an ID of the terminal and an ID of a base station. The base station 1 is a base station deployed on the satellite 1, the base station 2 is a base station deployed on the satellite 2, the base station 3 is a base station deployed on the satellite 3, and the base station 4 is a base station deployed on the satellite 4. One or more base stations may be deployed on one satellite, and a unique satellite may be determined based on the base station ID in the I-RNTI. Therefore, the I-RNTI in the first information may be indicated by using the combination of the ID of the terminal and the ID of the satellite, or may be indicated by using the combination of the ID of the terminal and the ID of the base station, and the satellite that stores the context information of the terminal can be determined in both of the two indication manners.

Specifically, the satellite 1 may include the first information in an RRC release message to send the first information to the terminal, where the first information includes a plurality of time periods and a plurality of I-RNTIs, each I-RNTI corresponds to one time period, and the I-RNTI includes the ID of the terminal and an ID of a satellite. It can be learned that each I-RNTI indicates an ID of a satellite that stores the context information of the terminal in a time period corresponding to the I-RNTI. When the terminal needs to switch to an RRC connected state, the satellite that stores the context information of the terminal may be determined based on a current time point.

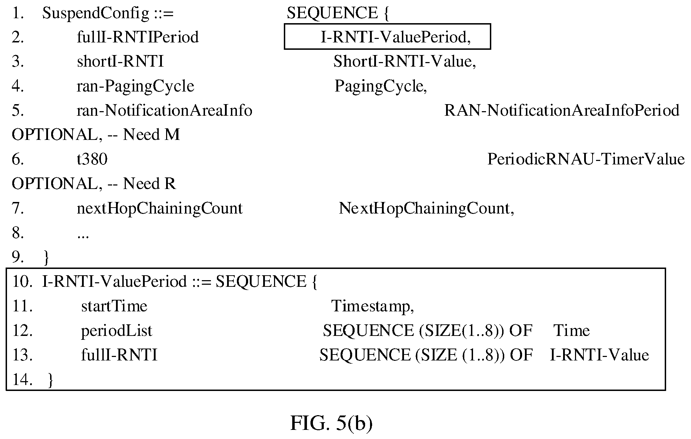

Specifically, the first information sent by the first network device to the terminal may be indicated by using a field shown in FIG. 5(b). FIG. 5(b) is a schematic diagram of first information according to an embodiment of this application. A part in a block in FIG. 5(b) is a part obtained by improving a conventional suspendConfig field in this embodiment of this application. In FIG. 5(b), a field on the left represents a name of the field, and a field on the right represents content corresponding to the field. It can be learned that content of a field on the right in line 2 is obtained through improvement, and the content is "I-RNTI-ValuePeriod", namely, an I-RNTI with a time period. In lines 10 to 14, the content of the field is defined, that is, the field "I-RNTI-ValuePeriod" includes: a start time (startTime), a time period list (periodList), and a fullI-RNTI (a type of the I-RNTI). A similarity to FIG. 3(b) lies in: Field content Timestamp corresponding to the field starttime indicates a specific timestamp, for example, 10:00. Field content SEQUENCE (SIZE (1..8)) OF Time corresponding to the field periodList indicates a specific time period, for example, 10 minutes, 10 minutes, ..., and 10 minutes, where SIZE (1..8) indicates that a quantity of time periods is 8. Field content SEQUENCE (SIZE (1..8)) OF I-RNTI-Value corresponding to the field fullI-RNTI indicates a specific I-RNTI, for example, ID of the terminal + ID of the satellite 1, ID of the terminal + ID of the satellite 2, and ID of the terminal + ID of the satellite 3. In other words, the time period in the first information and the I-RNTI corresponding to the time period are indicated by using the foregoing three fields.

Case 2: The first information includes an identifier of the first network device and third information, where the third information includes location information of the terminal or information about a moment at which the terminal enters the RRC inactive state.

It may be understood that because a satellite revolves regularly in an orbit, for any satellite, when a coverage area of the satellite leaves the location of the terminal, the satellite may transmit the context information of the terminal to a next satellite that covers the terminal. Therefore, each satellite may calculate, based on information such as the location information of the terminal, or the last serving satellite and the information about the moment at which the terminal enters the RRC inactive state, a satellite that stores the context information of the terminal at a specific moment.

502: After the terminal enters the RRC inactive state, the first network device sends the context information of the terminal to the second network device.

Specifically, the first network device directly sends the context information of the terminal to the second network device, or sends the context information of the terminal to the second network device via one or more fifth network devices, where the one or more fifth network devices are network devices located between the first network device and the second network device.

FIG. 4 is used as an example. Assuming that the satellite 1 is the last serving satellite, and the satellite 2 is a satellite that stores the context information of the terminal when the terminal accesses a new satellite, the context of the terminal stored in the satellite 2 is directly sent by the satellite 1, in other words, the first network device directly sends the context information of the terminal to the second network device.

Assuming that the satellite 1 is the last serving satellite, and the satellite 3 is a satellite that stores the context information of the terminal when the terminal accesses a new satellite, the context of the terminal stored in the satellite 3 is first sent by the satellite 1 to the satellite 2 and then sent by the satellite 2 to the satellite 3, in other words, the first network device sends the context information of the terminal to the second network device via the fifth network device.

Assuming that the satellite 1 is the last serving satellite, and the satellite 4 is a satellite that stores the context information of the terminal when the terminal accesses a new satellite, the context of the terminal stored in the satellite 4 is transmitted by the satellite 1 to the satellite 4 via the satellite 2 and the satellite 3, in other words, the first network device sends the context information of the terminal to the second network device via a plurality of fifth network devices.

Specifically, if the first network device sends the context information of the terminal to the second network device via the one or more fifth network devices, the first network device sends fourth information to the one or more fifth network devices, where the fourth information is used to indicate the one or more fifth network devices to send the context information of the terminal to the second network device.

It may be understood that after the terminal enters the RRC inactive state, the last serving satellite cannot determine a moment at which the terminal switches from the RRC inactive state to the RRC connected state. In other words, to ensure that when the terminal switches to the RRC connected state, the satellite that stores the context information of the terminal can be as close as possible to the satellite newly accessed by the terminal, the context information of the terminal may be transmitted according to a specific rule. For example, for any satellite, when a coverage area of the satellite leaves the location of the terminal, the satellite may transmit the context information of the terminal to a next satellite that covers the terminal.

Therefore, after the terminal enters the RRC inactive state, the last serving satellite may generate the fourth information, so that when sending the context information of the terminal to the fifth network device, the last serving satellite further sends, to the fifth network device, the fourth information used to indicate how the fifth network device transmits the context information of the terminal.

Optionally, for content included in the fourth information, there are at least the following two cases:

In a first case, the fourth information includes a time period and a network device identifier corresponding to the time period, where the fourth information may include one or more time periods, each time period corresponds to a network device identifier, and the network device identifier corresponding to the time period indicates a network device that stores the context information of the terminal in the time period.

In this case, the last serving satellite determines, in advance based on the location information of the terminal and the ephemeris information, the satellites whose coverage areas may pass through the current location of the terminal after the terminal enters the RRC inactive state, and determines a time period in which a coverage area of each satellite passes through the location of the terminal. In this way, in a process of transmitting the context information of the terminal, each satellite stores the context information of the terminal in a time period corresponding to the satellite, and transmits the context information of the terminal to a next satellite after the time period corresponding to the satellite elapses or when a next time period is about to arrive.

FIG. 4 is used as an example. Assuming that the satellite 1 is the last serving satellite, the fourth information determined by the satellite 1 may be indicated by using Table 6 or Table 7.

**Table 6**

| Time period | Satellite storing the context information of the terminal |
|---|---|
| T0 to T1 | Satellite 1 |
| T1 to T2 | Satellite 2 |
| T2 to T3 | Satellite 3 |
| T3 to T4 | Satellite 4 |

**Table 7**

| Time period | Satellite storing the context information of the terminal |
|---|---|
| T0 to T1 | Base station 1 |
| T1 to T2 | Base station 2 |
| T2 to T3 | Base station 3 |
| T3 to T4 | Base station 4 |

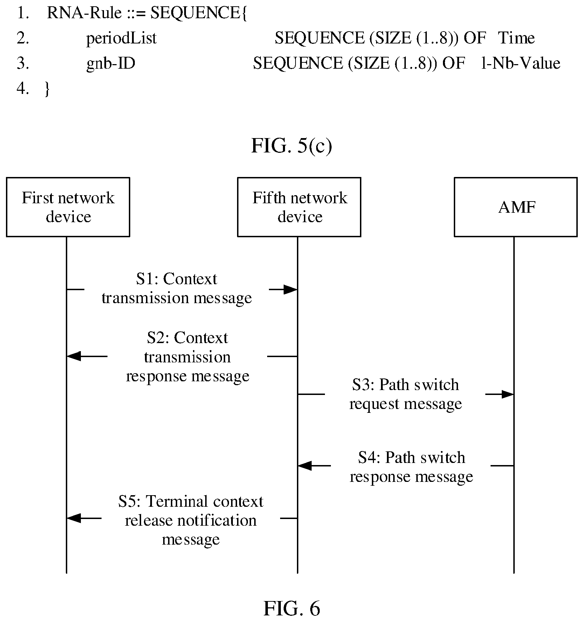

Specifically, refer to FIG. 5(c). FIG. 5(c) is a schematic diagram of fourth information according to an embodiment of this application. In FIG. 5(c), a field "RNA-Rule" in line 1 indicates a rule for transmitting a context of a terminal between satellites, and content of the rule includes a time period list (periodList) and a satellite base station ID (gnb-ID). Specifically, as shown in lines 2 and 3, content corresponding to the field periodList is SEQUENCE (SIZE (1..8)) OF Time, and indicates a specific time period, for example, T0 to T1, T1 to T2, ..., or T7 to T8, where SIZE (1..8) indicates that a quantity of time periods is 8. Field content SEQUENCE (SIZE (1..8)) OF I-Nb-Value corresponding to the field gnb-ID indicates a specific satellite, for example, a satellite 1, a satellite 2, ..., or a satellite 8.

In a second case, the fourth information includes the location information of the terminal, or the fourth information includes the identifier of the first network device and the information about the moment at which the terminal enters the RRC inactive state.

In this case, a specific context information transmission rule may be pre-stored in the satellite. When the context information of the terminal is transmitted between satellites, corresponding context storage determining information (namely, the fourth information) is together transmitted, so that each satellite can determine, based on the fourth information, a time period for storing the context information of the terminal.

Specifically, there are at least the following several implementations in which the satellite determines, based on the fourth information, the time period for storing the context information of the terminal:
Implementation 1: The satellite determines, based on the location information of the terminal, the time period for storing the context information of the terminal.

After receiving the context information of the terminal and the location information of the terminal, the satellite may determine, based on the location information of the terminal and the ephemeris information, a moment at which the coverage area of the satellite leaves the location of the terminal. In this case, a time period between a moment at which the satellite receives the context information of the terminal and the moment at which the coverage area of the satellite leaves the location of the terminal is the time period in which the satellite stores the context information of the terminal.

For example, after the satellite 1 sends the context information of the terminal and the location information of the terminal to the satellite 2 at the moment T1, the satellite 2 determines, based on the location information of the terminal, that a moment at which the coverage area of the satellite 2 leaves the location of the terminal is T2. In this case, a time period in which the satellite 2 stores the context information of the terminal is T1 to T2.

Implementation 2: The satellite determines, based on the identifier of the last serving satellite and the information about the moment at which the terminal enters the RRC inactive state, the time period for storing the context information of the terminal.

Specifically, in some cases, a distance between any two adjacent satellites revolving in a same orbit is usually the same, and a moving speed of each satellite in the orbit is also the same, that is, for any two adjacent satellites, a time period required for the second satellite to move to a location of the first satellite is the same. Therefore, a location at which the last serving satellite is located when the terminal enters the RRC inactive state may be used as a reference location. When a next satellite moves to the reference location, a current satellite sends the context information of the terminal to the next satellite. The rest can be deduced by analogy.

FIG. 4 is used as an example. For the satellite 1 to the satellite 4 in a same orbit, it is assumed that a time period required for a next satellite to move to a location of a current satellite is Tn, the terminal enters the RRC inactive state at the moment T0, and the terminal is located within the coverage area of the satellite 1 when entering the RRC inactive state. Because a time period required for the satellite 2 to move to a location at which the satellite 1 is located at the moment T0 is Tn, the satellite 1 may send the context information of the terminal to the satellite 2 at a moment T0+Tn. That is, a time period in which the satellite 1 stores the context information of the terminal is T0 to T0+Tn. The rest can be deduced by analogy. A time period in which the satellite 2 stores the context information of the terminal is T0+Tn to T0+2Tn, and a time period in which the satellite 3 stores the context information of the terminal is T0+2Tn to T0+3Tn.

It can be learned from the foregoing that any satellite located after the last serving satellite may determine, based on the identifier of the last serving satellite, a rank of the satellite in a sequence starting from the last serving satellite, and then determine, with reference to the information about the moment at which the terminal enters the RRC inactive state, a time period in which the satellite stores the context information of the terminal.

In addition, in addition to determining, based on the fourth information, the time period for storing the context information of the terminal, the satellite may alternatively store the context information of the terminal for a period of time after receiving the context information of the terminal, and then transmit the context information of the terminal to a next satellite. Duration in which the satellite stores the context information of the terminal is fixed, that is, only the context information of the terminal needs to be transmitted between satellites, and the fourth information does not need to be transmitted.

Specifically, when the distance between any two adjacent satellites revolving in the same orbit is the same, and the moving speed of each satellite in the orbit is the same, if the area of a coverage area of each satellite is basically the same, for any satellite in the orbit, duration in which the location of the terminal is within a coverage area of the satellite is fixed. Therefore, after receiving the context information of the terminal sent by a previous satellite, each satellite may store the context information of the terminal for a fixed period of time, and then send the context information of the terminal to a next satellite.

FIG. 4 is used as an example, and it is assumed that for the satellite 1 to the satellite 4 in the same orbit, duration in which the location of the terminal is within the coverage area of any satellite is Ts. If the satellite 1 sends the context information of the terminal to the satellite 2 at the moment T1, the context information of the terminal is stored in the satellite 2 for Ts, and the satellite 2 sends the context information of the terminal to the satellite 3 at a moment T1+Ts. Similarly, the satellite 3 sends the context information of the terminal to the satellite 4 at a moment T1+2Ts.

Based on the foregoing descriptions, the following specifically describes, by using FIG. 6, a process of transmitting the context information of the terminal between network devices. Refer to FIG. 6. FIG. 6 is a schematic diagram of a process of transmitting context information of a terminal. As shown in FIG. 6, the process of transmitting the context information of the terminal between the network devices is specifically as follows:
S1: The first network device sends a context transmission message to the fifth network device, where the context transmission message includes the context information of the terminal, or the context transmission message includes the context information of the terminal and the fourth information.

When determining to transmit the context information of the terminal to the fifth network device, the first network device includes the context information of the terminal in the context transmission message, and sends the context transmission message to the fifth network device. The context transmission message may carry only the context information of the terminal, and the fifth network device may send the context information of the terminal to the second network device or a next fifth network device according to the foregoing rule after storing the context information of the terminal for a fixed period of time. Alternatively, the context transmission message may further carry the fourth information, and the fifth network device may send the context information of the terminal to the second network device or a next fifth network device at a specific moment based on an indication by the fourth information.

S2: After receiving the context transmission message, the fifth network device sends a context transmission response message to the first network device.

The fifth network device sends the context transmission response message to the first network device, to notify the first network device of a message indicating that the context information of the terminal has been successfully received.

S3: The fifth network device sends a path switch request message to an AMF.

After receiving the context information of the terminal, the fifth network device sends the path switch request message to a core network, to request the core network to switch a connection between the core network and the first network device to a connection between the core network and the fifth network device.

S4: The AMF sends a path switch response message to the fifth network device.

After the core network performs path switching, that is, after the core network establishes the connection to the fifth network device, the core network sends the path switch response message to the fifth network device, to notify the fifth network device of a message indicating that the path switching succeeds. After the connection between the core network and the first network device is switched to the connection between the core network and the fifth network device, when needing to page the terminal, the core network sends a paging message to the fifth network device, and the fifth network device pages the terminal.

S5: The fifth network device sends a terminal context release notification message to the first network device.

After the path switching succeeds, the fifth network device notifies the first network device to release the context information of the terminal.

It should be noted that FIG. 6 shows a process of transmitting the context information of the terminal between the first network device and the fifth network device. In an actual application, the process in FIG. 6 is also applicable to transmitting the context information of the terminal between the first network device and the second network device and transmitting the context information of the terminal between two different fifth network devices, that is, when the context information of the terminal is transmitted between network devices, a connection between a current network device and the core network is also switched to a connection between a next network device and the core network.

503: The terminal determines second information based on the first information.

After the terminal enters the RRC inactive state, and when the terminal obtains a paging message through monitoring or the terminal is to send signaling or data, the terminal needs to switch from the RRC inactive state to the RRC connected state. In this case, the terminal determines the second information based on the first information delivered by the first network device, so that the network device newly accessed by the terminal can determine, based on the second information, a network device that currently stores the context information of the terminal.

Specifically, when the first information includes the time period and the network device identifier corresponding to the time period, the terminal determines a corresponding time period based on current time information, obtains a network device identifier corresponding to the time period, and then sends the network device identifier as the second information to the network device newly accessed by the terminal. This is not according to the invention.

In addition, in some particular cases, the second information further includes an identifier of a fourth network device. Specifically, if a moment at which the terminal needs to determine the second information is in a time period, and the moment is relatively close to another time period, the context information of the terminal may be stored in one of two network devices corresponding to the two time periods. Therefore, in this case, the second information determined by the terminal may include identifiers of the two network devices (namely, an identifier of the second network device and the identifier of the fourth network device), so that when the third network device cannot obtain the context information of the terminal based on the identifier of one of the two network devices, the third network device may obtain the context information of the terminal based on the identifier of the other network device. The fourth network device corresponds to a first time period, the second network device corresponds to a second time period, there is a second moment which is the only same moment between the first time period and the second time period, and a time length between a first moment and the second moment is less than or equal to a preset time threshold. For example, for the time period T2 to T3 and the time period T3 to T4, there is only a same second moment T3 between the two time periods, and the second moment T3 is also an intermediate moment of the two time periods; and the preset time threshold (also referred to as a transmission guard time) is t. In this case, if a current moment falls within a range of (T3-t, T3+t), the terminal needs to determine a network device identifier corresponding to the time period T2 to T3 and a network device identifier corresponding to the time period T3 to T4.

FIG. 4 is used as an example. Assuming that T2 is 1:10, T3 is 1:30, T4 is 1:50, and the preset time threshold t is two minutes, the terminal selects the I-RNTI = ID of the terminal + ID of the satellite 4 at 1:31 based on the correspondence between a time period and an I-RNTI in Table 4. Because 1:31 falls within a range (1:28, 1:32), the terminal further needs to select the I-RNTI = ID of the terminal + ID of the satellite 3 as a candidate I-RNTI. It may be understood that the context information of the terminal stored in the satellite 3 may have not been sent to the satellite 4 at 1:31 due to a factor, for example, a transmission failure, a relatively long transmission latency between the satellite 3 and the satellite 4, or inaccurate time information of the terminal. Therefore, the terminal sends the candidate I-RNTI to the newly accessed satellite, to ensure that when the newly accessed satellite cannot obtain the context information of the terminal from the satellite 4, the newly accessed satellite can obtain the context information of the terminal from the satellite 3. This ensures availability of the context information of the terminal. Similarly, the satellite 3 may not have the context information of the terminal at 1:29 due to a factor, for example, premature sending of the context information of the terminal to the satellite 4 by the satellite 3 or inaccurate time information of the terminal. In this case, the terminal may also send the identifier of the satellite 3 and the identifier of the satellite 4, to ensure that the newly accessed satellite can successfully obtain the context information of the terminal.

In this embodiment of this application, the preset time threshold is set as the transmission guard time, so that when a time length between a moment at which the terminal determines to switch to the RRC connected state and an intermediate moment between two time periods does not exceed the preset time threshold, the terminal determines, as the second information, network device identifiers corresponding to the two time periods. This ensures that the network device newly accessed by the terminal can successfully obtain the context information of the terminal.

When the first information includes the identifier of the first network device and the third information, and the third information includes the location information of the terminal or includes the information about the moment at which the terminal enters the RRC inactive state, the second information determined by the terminal also includes the identifier of the first network device and the third information. In other words, the second information and the first information are the same.

504: The terminal sends the second information to the third network device.

FIG. 4 is used as an example. When the first information includes a time period and a network device identifier corresponding to the time period, assuming that at any moment in the time period T2 to T3, the terminal obtains the paging message through monitoring or is to send the signaling or data, the terminal obtains, based on the time period T2 to T3, the I-RNTI (ID of the terminal + ID of the satellite 3) corresponding to the time period T2 to T3, and then sends the I-RNTI to the satellite newly accessed by the terminal. The newly accessed satellite parses the I-RNTI, to learn that the context information of the terminal is stored in the satellite 3. This is not according to the invention.

When the first information includes the identifier of the last serving satellite and the third information, and when the terminal obtains the paging message through monitoring or is to send the signaling or data, the terminal sends, to the satellite newly accessed by the terminal, the second information determined based on the first information. The newly accessed satellite may learn of, based on the current time information and the second information, a satellite that stores the context information of the terminal.

505: The third network device sends a context information request to the second network device.

506: The second network device sends the context information of the terminal to the third network device.

After determining, based on the second information, the second network device that stores the context information of the terminal, the third network device requests the context information of the terminal from the second network device. The second network device sends the context information of the terminal to the third network device based on the request of the third network device.

Specifically, after receiving the context information of the terminal, the third network device may send a path switch request message to a core network, to request to switch a connection between the second network device and the core network to a connection between the third network device and the core network. After path switching succeeds, the third network device notifies the second network device to release the context information of the terminal. The process is similar to steps S3 to S5. For details, refer to steps S3 to S5, and details are not described herein again.

507: The third network device establishes a communication connection to the terminal.

Finally, after the third network device obtains the context information of the terminal and establishes the connection to the core network, the third network device establishes the communication connection to the terminal, to restore an RRC connection of the terminal.

In this embodiment of this application, after the terminal enters the RRC inactive state, the network device that last serves the terminal transmits, on an appropriate occasion, the context information of the terminal to a network device that may serve the terminal, so that the network device that stores the context information of the terminal is as close as possible to the network device newly accessed by the terminal. This reduces a latency for obtaining the context information of the terminal by the network device newly accessed by the terminal, and further reduces a latency for the terminal to switch from the RRC inactive state to the RRC connected state.

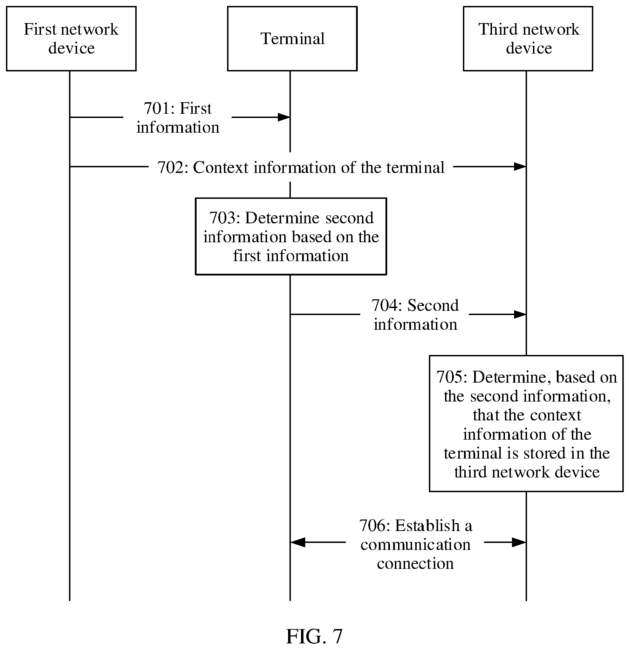

FIG. 7 is a schematic flowchart of a communication method. As shown in FIG. 7, the method may include the following steps.

701: A first network device sends first information to a terminal.

702: After the terminal enters an RRC inactive state, the first network device sends context information of the terminal to a third network device.

703: The terminal determines second information based on the first information.

704: The terminal sends the second information to the third network device.

Steps 701 to 704 are similar to steps 501 to 504. For details, refer to steps 501 to 504. An only difference of steps 701 to 704 from steps 501 to 504 lies in: The third network device is both a network device newly accessed by the terminal and a network device that stores the context information of the terminal.

FIG. 4 is used as an example. It is assumed that a satellite 1 is a last serving satellite. The satellite 1 sends context information of a terminal to a satellite 2 at a moment T1. When the terminal determines, in a time period T1 to T2, to switch to an RRC connected state, the terminal is located within a coverage area of the satellite 2, and a satellite newly accessed by the terminal is the satellite 2. At this moment, the context information of the terminal is also stored in the satellite 2. In other words, the satellite 2 is both a network device newly accessed by the terminal and a network device that stores the context information of the terminal.

705: The third network device determines, based on the second information, that the context of the terminal is stored in the third network device.

706: The third network device establishes a communication connection to the terminal.

When the third network device is also the network device that stores the context information of the terminal, the third network device may determine, by parsing the second information, that the context information of the terminal is stored in the third network device itself. In this case, the third network device does not need to request the context information of the terminal from another network device, and may directly establish the communication connection to the terminal.

In this embodiment of this application, after the terminal enters the RRC inactive state, the network device that last serves the terminal transmits, on an appropriate occasion, the context information of the terminal to a network device that may serve the terminal, so that the network device that stores the context information of the terminal is exactly the network device newly accessed by the terminal, and the newly accessed network device does not need to obtain the context information of the terminal from another network device. This greatly reduces a latency for the terminal to switch from the RRC inactive state to the RRC connected state.

To better implement the foregoing solutions in the embodiments of this application, the following further provides related apparatuses for implementing the foregoing solutions.

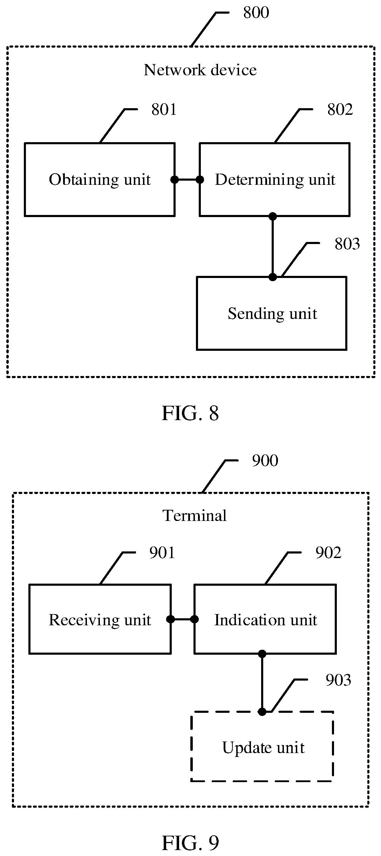

Refer to FIG. 8. FIG. 8 is a schematic diagram of a structure of a network device 800.

The network device 800 provided in this embodiment of this application includes:
an obtaining unit 801, configured to obtain location information of a terminal;
a determining unit 802, configured to determine radio access network-based notification area RNA information based on the location information of the terminal, where the RNA information is used to indicate RNAs corresponding to the terminal in different time periods; and
a sending unit 803, configured to send the RNA information to the terminal.

In some possible implementations of this embodiment of this application, the RNA information includes a time period and cell information corresponding to the time period, and the cell information indicates one or more cells located within an RNA coverage area in the time period.

In some possible implementations of this embodiment of this application, the RNA information includes a time period and an RNA identifier corresponding to the time period, and the RNA identifier indicates an RNA corresponding to the terminal in the time period.

Refer to FIG. 9. FIG. 9 is a schematic diagram of a structure of a terminal 900.

The terminal 900 provided in this embodiment of this application includes:
a receiving unit 901, configured to receive RNA information sent by a network device, where the RNA information is used to indicate RNAs corresponding to the terminal in different time periods; and
an indication unit 902, configured to indicate the terminal to enter an RRC inactive state.

In some possible implementations of this embodiment of this application, the terminal 900 further includes:
an update unit 903, configured to perform an RNA update if the terminal is in a time period corresponding to a first RNA and the first RNA is different from a second RNA, where the first RNA is an RNA in the RNA information, and the second RNA is an RNA obtained by the terminal through monitoring.

In some possible implementations of this embodiment of this application, the RNA information includes a time period and cell information corresponding to the time period, and the cell information indicates one or more cells located within an RNA coverage area in the time period.

In some possible implementations of this embodiment of this application, the RNA information includes a time period and an RNA identifier corresponding to the time period, and the RNA identifier indicates an RNA corresponding to the terminal in the time period.

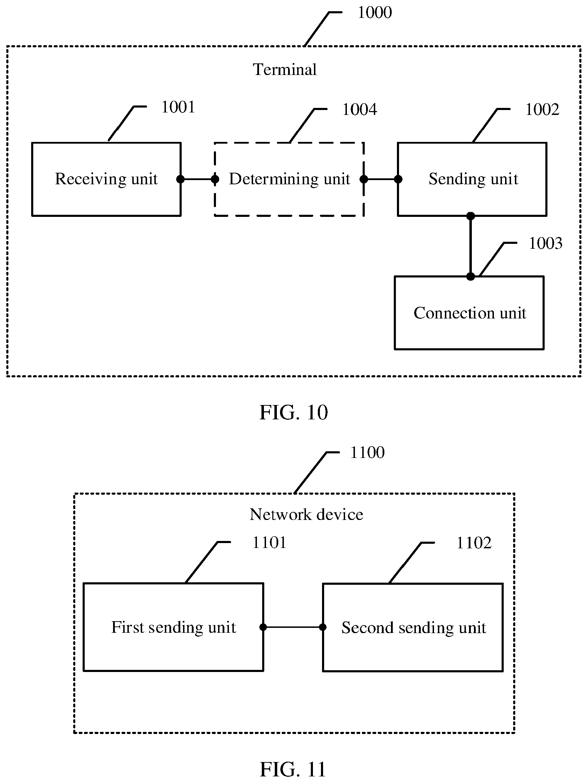

Refer to FIG. 10. FIG. 10 is a schematic diagram of a structure of a terminal 1000.

The terminal 1000 provided in this embodiment of this application includes:
a receiving unit 1001, configured to receive first information sent by a first network device;
a sending unit 1002, configured to send second information to a third network device after the terminal enters an RRC inactive state, where the second information is determined based on the first information, the second information is used to indicate the third network device to obtain context information of the terminal from a second network device, and a communication distance between the second network device and the third network device is less than a communication distance between the third network device and the first network device; and
a connection unit 1003, configured to establish a communication connection to the third network device.

In some possible implementations of this embodiment of this application, the context information in the second network device is sent by the first network device, or is sent by the first network device via one or more fifth network devices, where the one or more fifth network devices are network devices located between the first network device and the second network device.

In some possible implementations of this embodiment of this application, the terminal further includes:
a determining unit 1004, configured to determine the second information based on the first information if the terminal obtains a paging message through monitoring or the terminal is to send signaling or data.

In some possible implementations of this embodiment of this application, the first information includes a time period and a network device identifier corresponding to the time period, and the network device identifier includes an identifier of the second network device; and
the second information includes the identifier of the second network device.

In some possible implementations of this embodiment of this application, the second information further includes an identifier of a fourth network device, the fourth network device corresponds to a first time period, the second network device corresponds to a second time period, there is a second moment which is the only same moment between the first time period and the second time period, and a time length between a first moment and the second moment is less than or equal to a preset time threshold.

In some possible implementations of this embodiment of this application, both the first information and the second information include an identifier of the first network device and third information, where the third information includes location information of the terminal or information about a moment at which the terminal enters the RRC inactive state.

Refer to FIG. 11. FIG. 11 is a schematic diagram of a structure of a network device 1100.

The network device 1100 provided in this embodiment of this application includes:
a first sending unit 1101, configured to send first information to a terminal, where the first information is used to indicate a third network device to obtain context information of the terminal from a second network device, and the third network device is a network device connected to the terminal after the terminal enters an RRC connected state from an RRC inactive state; and
a second sending unit 1102, configured to: after the terminal enters the RRC inactive state, send the context information of the terminal to the second network device. or send the context information of the terminal to the second network device via one or more fifth network devices, where the one or more fifth network devices are network devices located between the first network device and the second network device.

In some possible implementations of this embodiment of this application, the first information includes a time period and a network device identifier corresponding to the time period, and the network device identifier includes an identifier of the second network device.

In some possible implementations of this embodiment of this application, the first information includes an identifier of the first network device and third information, where
the third information includes location information of the terminal or information about a moment at which the terminal enters the RRC inactive state.

In some possible implementations of this embodiment of this application, the fourth information includes a time period and a network device identifier corresponding to the time period, and the network device identifier includes an identifier of the second network device.

In some possible implementations of this embodiment of this application, the second sending unit 1102 is further configured to: if the first network device sends the context information of the terminal to the second network device via the one or more fifth network devices, send fourth information to the one or more fifth network devices, where the fourth information is used to indicate the one or more fifth network devices to send the context information of the terminal to the second network device.

In some possible implementations of this embodiment of this application, the fourth information includes a time period and a network device identifier corresponding to the time period, and the network device identifier includes an identifier of the second network device.

In some possible implementations of this embodiment of this application, the fourth information includes location information of the terminal, or the fourth information includes an identifier of the first network device and information about a moment at which the terminal enters the RRC inactive state.

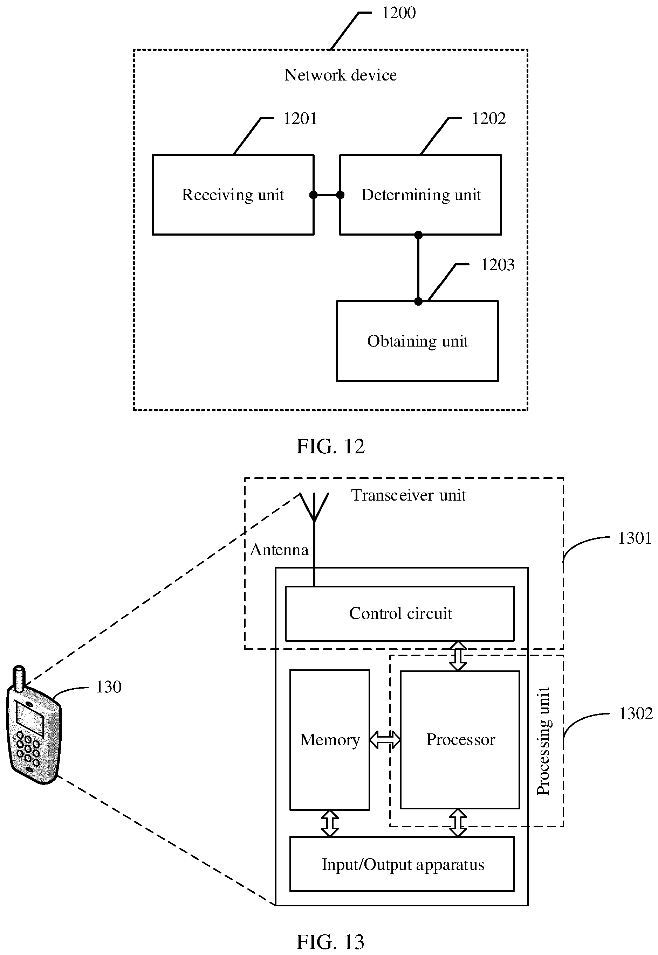

Refer to FIG. 12. FIG. 12 is a schematic diagram of a structure of a network device 1200.

The network device 1200 provided in this embodiment of this application includes:
a receiving unit 1201, configured to receive second information sent by a terminal, where the second information includes an identifier of a first network device and third information, the first network device is a network device connected to the terminal before the terminal enters an RRC inactive state, and the third information includes location information of the terminal or information about a moment at which the terminal enters the RRC inactive state;
a determining unit 1202, configured to determine, based on the second information, a second network device that stores context information of the terminal; and
an obtaining unit 1203, configured to obtain the context information of the terminal from the second network device.

It should be noted that content such as information exchange between the modules/units of the apparatus and the execution processes thereof are based on the same idea as the method embodiments of this application, and achieves same technical effects as the method embodiments of this application. For specific content, refer to the descriptions in the foregoing method embodiments of this application. Details are not described herein again. FIG. 13 is a schematic diagram of a structure of a terminal device 130. The terminal device may be used in the system shown in FIG. 1, and performs functions of the terminal device in the foregoing method embodiments. For ease of description, FIG. 13 shows only main components of the terminal device. As shown in FIG. 13, the terminal device 130 includes a processor, a memory, a control circuit, an antenna, and an input/output apparatus. The processor is mainly configured to process a communication protocol and communication data, control the entire terminal device, execute a software program, and process data of the software program, for example, configured to support the terminal device in performing actions described in the foregoing method embodiments. The memory is mainly configured to store the software program and data. The control circuit is mainly configured to perform conversion between a baseband signal and a radio frequency signal, and process the radio frequency signal. A combination of the control circuit and the antenna may also be referred to as a transceiver that is mainly configured to send and receive a radio frequency signal in an electromagnetic wave form. The input/output apparatus, such as a touchscreen, a display, or a keyboard, is mainly configured to receive data entered by a user, and output data to the user.

After the terminal device is powered on, the processor may read the software program in a storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 13 shows only one memory and only one processor. In an actual terminal device, there may be a plurality of processors and a plurality of memories. The memory may also be referred to as a storage medium, a storage device, or the like. This is not limited in the embodiments of this application.

In an optional implementation, the processor may include a baseband processor and/or a central processing unit. The baseband processor is mainly configured to process the communication protocol and the communication data. The central processing unit is mainly configured to control the entire terminal device, execute the software program, and process the data of the software program. The processor in FIG. 13 may integrate functions of the baseband processor and the central processing unit. A person skilled in the art may understand that the baseband processor and the central processing unit may alternatively be processors independent of each other, and interconnected by using a technology, for example, a bus. A person skilled in the art may understand that the terminal device may include a plurality of baseband processors to adapt to different network standards, the terminal device may include a plurality of central processing units to improve a processing capability of the terminal device, and the components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor; or may be stored in the storage unit in a form of a software program, where the processor executes the software program to implement a baseband processing function.

In this embodiment of this application, the antenna and the control circuit that have a transceiver function may be considered as a transceiver unit 1301 of the terminal device 130, for example, to support the terminal device in performing a receiving function and a sending function in FIG. 2. The processor having a processing function is considered as a processing unit 1302 of the terminal device 130. As shown in FIG. 13, the terminal device 130 includes the transceiver unit 1301 and the processing unit 1302. The transceiver unit may also be referred to as a transceiver, a transceiver, a transceiver apparatus, or the like. Optionally, a component configured to implement the receiving function in the transceiver unit 1301 may be considered as a receiving unit, and a component configured to implement the sending function in the transceiver unit 1301 may be considered as a sending unit. In other words, the transceiver unit 1301 includes the receiving unit and the sending unit. The receiving unit may also be referred to as a receiver, an input port, a receiver circuit, or the like, and the sending unit may be referred to as a transmitter, a transmitter, a transmitter circuit, or the like.

The processing unit 1302 may be configured to execute instructions stored in the memory to control the transceiver unit 1301 to receive a signal and/or send a signal, to complete functions of the terminal device in the foregoing method embodiments. In an implementation, it may be considered to implement a function of the transceiver unit 1301 by using a transceiver circuit or a dedicated transceiver chip.

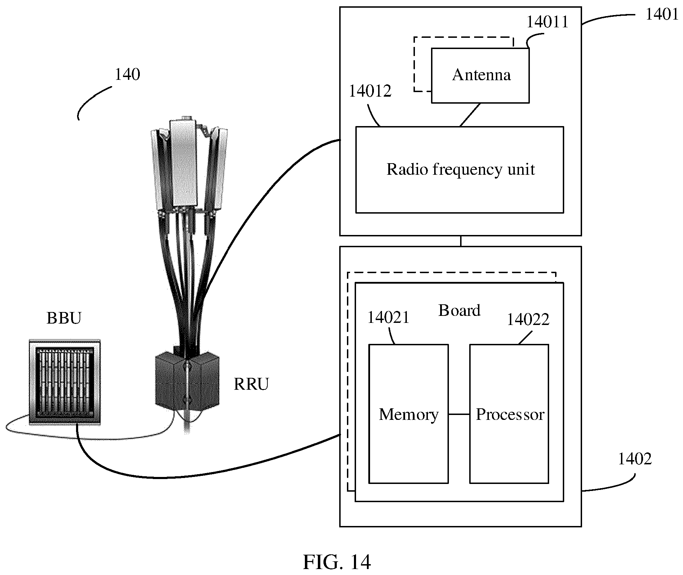

FIG. 14 is a schematic diagram of a structure of a network device, and for example, may be a schematic diagram of a structure of a base station. As shown in FIG. 14, the base station may be used in the system shown in FIG. 1, to perform functions of the network device in the foregoing method embodiments. The base station 140 may include one or more radio frequency units, for example, a remote radio unit (remote radio unit, RRU) 1401 and one or more baseband units (baseband units, BBUs) (which may also be referred to as digital units (digital units, DUs)) 1402. The RRU 1401 may be referred to as a transceiver unit, a transceiver, a transceiver circuit, a transceiver, or the like, and may include at least one antenna 14011 and a radio frequency unit 14012. The RRU 1401 is mainly configured to send and receive a radio frequency signal, and perform conversion between the radio frequency signal and a baseband signal. For example, the RRU 1401 is configured to send first information in the foregoing embodiments to a terminal device. The BBU 1402 is mainly configured to perform baseband processing, control the base station, and so on. The RRU 1401 and the BBU 1402 may be physically disposed together; or may be physically disposed separately, in other words, in a distributed base station.

The BBU 1402 is a control center of the base station, may also be referred to as a processing unit, and is mainly configured to complete a baseband processing function, for example, channel coding, multiplexing, modulation, or spreading. For example, the BBU (the processing unit) 1402 may be configured to control the base station to perform an operation procedure related to the network device in the foregoing method embodiments.

In an example, the BBU 1402 may include one or more boards. A plurality of boards may jointly support a radio access network (for example, an LTE network) of a single access standard, or may separately support radio access networks (such as an LTE network, a 5G network, or another network) of different access standards. The BBU 1402 further includes a memory 14021 and a processor 14022. The memory 14021 is configured to store necessary instructions and data. The processor 14022 is configured to control the base station to perform a necessary action, for example, configured to control the base station to perform the operation procedure related to the network device in the foregoing method embodiments. The memory 14021 and the processor 14022 may serve one or more boards. In other words, the memory and the processor may be independently disposed on each board. Alternatively, a plurality of boards may share the same memory and the same processor. In addition, a necessary circuit may be further disposed on each board.

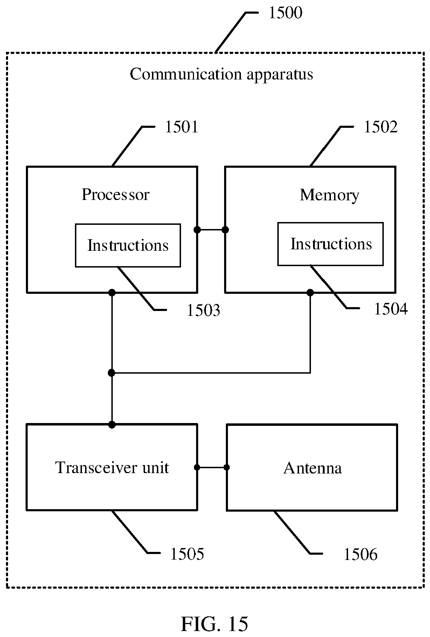

FIG. 15 is a schematic diagram of a structure of a communication apparatus according to an embodiment of this application. The communication apparatus 1500 may be configured to implement the methods described in the foregoing method embodiments. For details, refer to the descriptions in the foregoing method embodiments. The communication apparatus 1500 may be a chip, a network device (for example, a base station), a terminal device, another network device, or the like.

The communication apparatus 1500 includes one or more processors 1501. The processor 1501 may be a general-purpose processor, a special-purpose processor, or the like. For example, the processor 1501 may be a baseband processor or a central processing unit. The baseband processor may be configured to process a communication protocol and communication data. The central processing unit may be configured to control the communication apparatus (for example, a base station, a terminal, or a chip), execute a software program, and process data of the software program. The communication apparatus may include a transceiver unit, configured to input (receive) and output (send) signals. For example, the communication apparatus may be a chip, and the transceiver unit may be an input circuit and/or an output circuit or a communication interface of the chip. The chip may be used for a terminal, a base station, or another network device. For another example, the communication apparatus may be a terminal, a base station, or another network device, and the transceiver unit may be a transceiver, a radio frequency chip, or the like.

The communication apparatus 1500 includes the one or more processors 1501, and the one or more processors 1501 may implement the method performed by the network device or the terminal device in the embodiment shown in FIG. 2.

In a possible design, the communication apparatus 1500 includes a means (means) for generating first information and a means (means) for sending the first information. One or more processors may be used to implement functions of the means for generating the first information and the means for sending the first information. For example, the first information may be generated by using the one or more processors, and sent by using a transceiver, an input/output circuit, or an interface of a chip. For the first information, refer to the related descriptions in the foregoing method embodiments.

In a possible design, the communication apparatus 1500 includes a means (means) for receiving first information and a means (means) for sending second information based on the first information. For the first information and a method for sending the second information based on the first information, refer to the related descriptions in the foregoing method embodiments. For example, the first information may be received by using a transceiver, an input/output circuit, or an interface of a chip, and the second information is sent based on the first information by using the one or more processors.

Optionally, the processor 1501 may further implement another function in addition to the method in the embodiment shown in FIG. 2.

Optionally, in a design, the processor 1501 may execute instructions, to enable the communication apparatus 1500 to perform the methods described in the foregoing method embodiments. All or some of the instructions, for example, instructions 1503, may be stored in the processor. Alternatively, all or some of the instructions, for example, instructions 1504, may be stored in a memory 1502 coupled to the processor. Alternatively, the instructions 1503 and the instructions 1504 may be used together to enable the communication apparatus 1500 to perform the methods described in the foregoing method embodiments.

In another possible design, the communication apparatus 1500 may alternatively include a circuit. The circuit may implement functions of the network device or the terminal device in the foregoing method embodiments.

In still another possible design, the communication apparatus 1500 may include one or more memories 1502, storing instructions 1504. The instructions may be run on the processor, to enable the communication apparatus 1500 to perform the methods described in the foregoing method embodiments. Optionally, the memory may further store data. Optionally, the processor may alternatively store instructions and/or data. For example, the one or more memories 1502 may store the correspondence described in the foregoing embodiments, or the related parameter, table, or the like in the foregoing embodiments. The processor and the memory may be separately disposed, or may be integrated together.

In still another possible design, the communication apparatus 1500 may further include a transceiver unit 1505 and an antenna 1506. The processor 1501 may be referred to as a processing unit, and controls the communication apparatus (a terminal or a base station). The transceiver unit 1505 may be referred to as a transceiver, a transceiver circuit, a transceiver, or the like, and is configured to implement a transceiver function of the communication apparatus through the antenna 1506.

This application further provides a communication system, including the foregoing one or more network devices and one or more terminal devices.

It should be noted that the processor in the embodiments of this application may be an integrated circuit chip, and has a signal processing capability. In an implementation process, the steps in the foregoing method embodiments may be implemented by using a hardware integrated logic circuit in the processor, or by using instructions in a form of software. The processor may be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in the embodiments of this application. The general-purpose processor may be a microprocessor, or the processor may be any conventional processor or the like. The steps in the methods disclosed with reference to the embodiments of this application may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in the embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. For example but not for limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these memories and any memory of another proper type.

An embodiment of this application further provides a computer-readable medium. The computer-readable medium stores a computer program. When the computer program is executed by a computer, the communication method in any one of the foregoing method embodiments is implemented.

An embodiment of this application further provides a computer program product. When the computer program product is executed by a computer, the communication method in any one of the foregoing method embodiments is implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded or executed on a computer, the procedures or functions according to the embodiments of this application are completely or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (Digital Video Disc, DVD)), a semiconductor medium (for example, a solid-state drive (Solid-State Drive, SSD)), or the like.

An embodiment of this application further provides a processing apparatus, including a processor and an interface, where the processor is configured to perform the communication method in any one of the foregoing method embodiments.

It should be understood that the foregoing processing apparatus may be a chip. The processor may be implemented by using hardware, or may be implemented by using software. When being implemented by using hardware, the processor may be a logic circuit, an integrated circuit, or the like. When being implemented by using software, the processor may be a general-purpose processor, and is implemented by reading software code stored in a memory. The memory may be integrated into the processor, or may exist independently outside the processor.

It should be understood that "one embodiment" or "an embodiment" mentioned in the entire specification means that particular features, structures, or characteristics related to the embodiments are included in at least one embodiment of this application. Therefore, "in one embodiment" or "in an embodiment" appearing throughout the entire specification does not necessarily refer to a same embodiment. In addition, these particular features, structures, or characteristics may be combined in one or more embodiments in any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In addition, the terms "system" and "network" in this specification may be often used interchangeably in this specification. The term "and/or" in this specification describes only an association relationship between objects and represents that three relationships may exist. For example, A and/or B may represent the following three cases: Only A exists, both A and B exist, and only B exists. In addition, the character "/" in this specification generally indicates an "or" relationship between associated objects.

It should be understood that in the embodiments of this application, "B corresponding to A" indicates that B is associated with A, and B may be determined based on A. However, it should be further understood that determining B based on A does not mean that B is determined based on only A. B may alternatively be determined based on A and/or other information.

A person of ordinary skill in the art may be aware that, in combination with the embodiments disclosed in this specification, units and algorithm steps in the examples can be implemented by electronic hardware, computer software, or a combination thereof. To clearly describe the interchangeability between hardware and software, the foregoing has generally described compositions and steps of each example based on functions. Whether the functions are performed by hardware or software depends on particular applications and design constraints of the technical solutions. A person skilled in the art may use a different method to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments, and details are not described herein again.

In the several embodiments provided in this application, it should be understood that the disclosed system, apparatus, and method may be implemented in another manner. For example, the foregoing apparatus embodiment is only an example. For example, division into the units is only a type of division of logical functions, and may be another division manner in an actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, may be located in one location, or may be distributed on a plurality of network units. A part or all of the units may be selected based on actual requirements to achieve the objectives of the solutions in the embodiments of this application.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

With descriptions of the foregoing implementations, a person skilled in the art may clearly understand that this application may be implemented by using hardware, firmware, or a combination thereof. When this application is implemented by using software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium that can be accessed by a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can carry or store expected program code in a form of instructions or a data structure and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (DSL) or a wireless technology such as infrared ray, radio, or microwave, the coaxial cable, optical fiber/cable, twisted pair, DSL or wireless technology such as infrared ray, radio, or microwave is included in a definition of a medium to which they belong. A disk (Disk) and a disc (disc) used in this application include a compact disc (CD), a laser disc, an optical disc, a digital versatile disk (DVD), a floppy disk, and a Blu-ray disc. The disk usually copies data in a magnetic manner, whereas the disc copies data optically through a laser. The foregoing combination should also be included in the protection scope of the computer-readable medium.

In conclusion, the foregoing descriptions are merely example embodiments of the technical solutions of this application, but are not intended to limit the protection scope of this application. Any modification, equivalent replacement, or improvement made without departing from the principle of this application should fall in the protection scope of this application.

## Claims

1. A communication method, comprising:
receiving (501), by a terminal, first information sent by a first network device;
sending (504), by the terminal, second information to a third network device after the terminal enters a radio resource control RRC inactive state, wherein the second information is determined by the terminal based on the first information, the second information is used to indicate the third network device to obtain context information of the terminal from a second network device, and a communication distance between the second network device and the third network device is less than a communication distance between the third network device and the first network device; and
establishing (507), by the terminal, a communication connection to the third network device,
wherein the first network device, the second network device and the third network device are all satellites.

2. The communication method according to claim 1, wherein the context information in the second network device is sent by the first network device, or is sent by the first network device via one or more fifth network devices, wherein the one or more fifth network devices are network devices located between the first network device and the second network device.

3. The communication method according to claim 1 or 2, wherein before the sending, by the terminal, second information to a third network device after the terminal enters a radio resource control RRC inactive state, the method further comprises:
determining (502), by the terminal, the second information based on the first information if the terminal obtains a paging message through monitoring or the terminal is to send signaling or data.

4. The communication method according to claim 3, wherein both the first information and the second information comprise an identifier of the first network device and third information, and the third information comprises location information of the terminal or information about a moment at which the terminal enters the RRC inactive state.

5. A terminal, comprising a processor, configured to execute a program stored in a memory, wherein when the program is executed, the terminal is enabled to perform:
the method according to any one of claims 1 to 4.

6. A communication method, comprising:
sending (501), by a first network device, first information to a terminal, wherein the first information is used by the terminal to determine second information that is used to indicate a third network device to obtain context information of the terminal from a second network device, wherein a communication distance between the second network device and the third network device is less than a communication distance between the third network device and the first network device, and the third network device is a network device connected to the terminal after the terminal enters an RRC connected state from an RRC inactive state; and
after the terminal enters the RRC inactive state, sending (502), by the first network device, the context information of the terminal to the second network device, or sending (502), by the first network device, the context information of the terminal to the second network device via one or more fifth network devices, wherein the one or more fifth network devices are network devices located between the first network device and the second network device,
wherein the first network device, the second network device and the third network device are all satellites.

7. The communication method according to claim 6, wherein the first information comprises an identifier of the first network device and third information; and
the third information comprises location information of the terminal or information about a moment at which the terminal enters the RRC inactive state.

8. The communication method according to claim 6, wherein if the first network device sends the context information of the terminal to the second network device via the one or more fifth network devices, the first network device sends fourth information to the one or more fifth network devices, wherein the fourth information is used to indicate the one or more fifth network devices to send the context information of the terminal to the second network device.

9. The communication method according to claim 8. wherein the fourth information comprises a time period and a network device identifier corresponding to the time period, and the network device identifier comprises an identifier of the second network device.

10. The communication method according to claim 8, wherein the fourth information comprises location information of the terminal, or the fourth information comprises an identifier of the first network device and information about a moment at which the terminal enters the RRC inactive state.

11. A first network device, comprising a processor, configured to execute a program stored in a memory, wherein when the program is executed, the first network device is enabled to perform:
the method according to any one of claims 6 to 10.

12. A communication method, comprising:
receiving (504), by a third network device, second information sent by a terminal, wherein the second information comprises an identifier of a first network device and third information, the first network device is a network device connected to the terminal before the terminal enters an RRC inactive state, and the third information comprises location information of the terminal or information about a moment at which the terminal enters the RRC inactive state;
determining, by the third network device based on the second information, a second network device that stores context information of the terminal;
obtaining (506), by the third network device, the context information of the terminal from the second network device, wherein a communication distance between the second network device and the third network device is less than a communication distance between the third network device and the first network device; and
establishing (507), by the third network device, a communication connection to the terminal,
wherein the first network device, the second network device and the third network device are all satellites.

13. A third network device, comprising a processor, configured to execute a program stored in a memory, wherein when the program is executed, the third network device is enabled to perform:
the method according to claim 12.

14. A computer-readable storage medium, comprising instructions, which, when executed by a processor of a terminal, cause the terminal to perform the steps of the method according to any one of claims 1 to 4, or which, when executed by a processor of a first network device, cause the first network device to perform the steps of the method according to any one of claims 6-10, or which, when executed by a processor of a third network device, cause the third network device to perform the steps of the method according to claim 12.

15. A computer program product including computer program code, which, when executed by a processor of a terminal, causes the terminal to perform the steps of the method according to any one of claims 1 to 4, or which, when executed by a processor of a first network device, causes the first network device to perform the steps of the method according to any one of claims 6-10, or which, when executed by a processor of a third network device, causes the third network device to perform the steps of the method according to claim 12.

## Patentansprüche

1. Kommunikationsverfahren, Folgendes umfassend:
Empfangen (501), durch ein Endgerät, erster Informationen, die von einem ersten Netzwerkgerät gesendet werden,
Senden (504), durch das Endgerät, zweiter Informationen an ein drittes Netzwerkgerät, nachdem das Endgerät in einen Funkressourcensteuerung-, RRC-, inaktiv-Zustand eintritt, wobei die zweiten Informationen durch das Endgerät basierend auf den ersten Informationen bestimmt werden, die zweiten Informationen verwendet werden, um dem dritten Netzwerkgerät anzugeben, Kontextinformationen des Endgeräts von einem zweiten Netzwerkgerät zu erhalten, und eine Kommunikationsdistanz zwischen dem zweiten Netzwerkgerät und dem dritten Netzwerkgerät kleiner ist als eine Kommunikationsdistanz zwischen dem dritten Netzwerkgerät und dem ersten Netzwerkgerät; und
Herstellen (507), durch das Endgerät, einer Kommunikationsverbindung zu dem dritten Netzwerkgerät,
wobei das erste Netzwerkgerät, das zweite Netzwerkgerät und das dritte Netzwerkgerät sämtlich Satelliten sind.

2. Kommunikationsverfahren nach Anspruch 1, wobei die Kontextinformationen in dem zweiten Netzwerkgerät durch das erste Netzwerkgerät gesendet werden oder durch das erste Netzwerkgerät über ein oder mehrere fünfte Netzwerkgeräte gesendet werden, wobei das eine oder die mehreren fünften Netzwerkgeräte Netzwerkgeräte sind, die sich zwischen dem ersten Netzwerkgerät und dem zweiten Netzwerkgerät befinden.

3. Kommunikationsverfahren nach Anspruch 1 oder 2, wobei das Verfahren vor dem Senden, durch das Endgerät, zweiter Informationen an ein drittes Netzwerkgerät, nachdem das Endgerät in einen Funkressourcensteuerung-, RRC-, inaktiv-Zustand eintritt, ferner Folgendes umfasst:
Bestimmen (502), durch das Endgerät, der zweiten Informationen basierend auf den ersten Informationen, wenn das Endgerät eine Paging-Nachricht durch Überwachen erhält oder das Endgerät Signalgebung oder Daten senden soll.

4. Kommunikationsverfahren nach Anspruch 3, wobei sowohl die ersten Informationen als auch die zweiten Informationen eine Kennung des erste Netzwerkgeräts und dritte Informationen umfassen und die dritten Informationen Standortinformationen des Endgeräts oder Informationen über einen Zeitpunkt umfassen, zu dem das Endgerät in den RRC-inaktiv-Zustand eintritt.

5. Endgerät, einen Prozessor umfassend, der dafür konfiguriert ist, ein Programm auszuführen, das in einem Speicher gespeichert ist, wobei das Endgerät bei Ausführung des Programms in die Lage versetzt wird, Folgendes durchzuführen:
das Verfahren nach einem der Ansprüche 1 bis 4.

6. Kommunikationsverfahren, Folgendes umfassend:
Senden (501), durch ein erstes Netzwerkgerät, erster Informationen an ein Endgerät, wobei die ersten Informationen durch das Endgerät verwendet werden, um zweite Informationen zu bestimmen, die verwendet werden, um einem dritten Netzwerkgerät anzugeben, Kontextinformationen des Endgeräts von einem zweiten Netzwerkgerät zu erhalten, wobei eine Kommunikationsdistanz zwischen dem zweiten Netzwerkgerät und dem dritten Netzwerkgerät kleiner als eine Kommunikationsdistanz zwischen dem dritten Netzwerkgerät und dem ersten Netzwerkgerät ist, und das dritte Netzwerkgerät ein Netzwerkgerät ist, das mit dem Endgerät verbunden ist, nachdem das Endgerät von einem RRC-inaktiv-Zustand in einen RRC-verbunden-Zustand eintritt; und
nachdem das Endgerät in den RRC-inaktiv-Zustand eintritt, Senden (502), durch das erste Netzwerkgerät, der Kontextinformationen des Endgeräts an das zweite Netzwerkgerät oder Senden (502), durch das erste Netzwerkgerät, der Kontextinformationen des Endgeräts an das zweite Netzwerkgerät über ein oder mehrere fünfte Netzwerkgeräte, wobei das eine oder die mehreren fünften Netzwerkgeräte Netzwerkgeräte sind, die sich zwischen dem ersten Netzwerkgerät und dem zweiten Netzwerkgerät befinden,
wobei das erste Netzwerkgerät, das zweite Netzwerkgerät und das dritte Netzwerkgerät sämtlich Satelliten sind.

7. Kommunikationsverfahren nach Anspruch 6, wobei die ersten Informationen eine Kennung des ersten Netzwerkgeräts und dritte Informationen umfassen; und
die dritten Informationen Standortinformationen des Endgeräts oder Informationen über einen Zeitpunkt umfassen, zu dem das Endgerät in den RRC-inaktiv-Zustand eintritt.

8. Kommunikationsverfahren nach Anspruch 6, wobei, wenn das erste Netzwerkgerät die Kontextinformationen des Endgeräts über das eine oder die mehreren fünften Netzwerkgeräte an das zweite Netzwerkgerät sendet, das erste Netzwerkgerät vierte Informationen an das eine oder die mehreren fünften Netzwerkgeräte sendet, wobei die vierten Informationen verwendet werden, um dem einen oder den mehreren fünften Netzwerkgeräten anzugeben, die Kontextinformationen des Endgeräts an das zweite Netzwerkgerät zu senden.

9. Kommunikationsverfahren nach Anspruch 8, wobei die vierten Informationen eine Zeitspanne und eine der Zeitspanne entsprechende Netzwerkgerätekennung umfassen und die Netzwerkgerätekennung eine Kennung des zweiten Netzwerkgeräts umfasst.

10. Kommunikationsverfahren nach Anspruch 8, wobei die vierten Informationen Standortinformationen des Endgeräts umfassen oder die vierten Informationen eine Kennung des ersten Netzwerkgeräts und Informationen über einen Zeitpunkt umfassen, zu dem das Endgerät in den RRC-inaktiv-Zustand eintritt.

11. Erstes Netzwerkgerät, einen Prozessor umfassend, der dafür konfiguriert ist, ein Programm auszuführen, das in einem Speicher gespeichert ist, wobei das erste Netzwerkgerät bei Ausführung des Programms in die Lage versetzt wird, Folgendes durchzuführen:
das Verfahren nach einem der Ansprüche 6 bis 10.

12. Kommunikationsverfahren, Folgendes umfassend:
Empfangen (504), durch ein drittes Netzwerkgerät, zweiter Informationen, die von einem Endgerät gesendet werden, wobei die zweiten Informationen eine Kennung eines ersten Netzwerkgeräts und dritte Informationen umfassen, das erste Netzwerkgerät ein Netzwerkgerät ist, das mit dem Endgerät verbunden ist, bevor das Endgerät in einen RRC-inaktiv-Zustand eintritt, und die dritten Informationen Standortinformationen des Endgeräts oder Informationen über einen Zeitpunkt umfassen, zu dem das Endgerät in den RRC-inaktiv-Zustand eintritt;
Bestimmen, durch das dritte Netzwerkgerät basierend auf den zweiten Informationen, eines zweiten Netzwerkgeräts, das Kontextinformationen des Endgeräts speichert;
Erhalten (506), durch das dritte Netzwerkgerät, der Kontextinformationen des Endgeräts von dem zweiten Netzwerkgerät, wobei eine Kommunikationsdistanz zwischen dem zweiten Netzwerkgerät und dem dritten Netzwerkgerät kleiner ist als eine Kommunikationsdistanz zwischen dem dritten Netzwerkgerät und dem ersten Netzwerkgerät; und
Herstellen (507), durch das dritte Netzwerkgerät, einer Kommunikationsverbindung zu dem Endgerät;
wobei das erste Netzwerkgerät, das zweite Netzwerkgerät und das dritte Netzwerkgerät sämtlich Satelliten sind.

13. Drittes Netzwerkgerät, einen Prozessor umfassend, der dafür konfiguriert ist, ein Programm auszuführen, das in einem Speicher gespeichert ist, wobei das dritte Netzwerkgerät bei Ausführung des Programms in die Lage versetzt wird, Folgendes durchzuführen:
das Verfahren nach Anspruch 12.

14. Computerlesbares Speichermedium, Anweisungen umfassend, die bei Ausführung durch einen Prozessor eines Endgeräts das Endgerät veranlassen, die Schritte des Verfahrens nach einem der Ansprüche 1 bis 4 durchzuführen, oder die bei Ausführung durch einen Prozessor eines ersten Netzwerkgeräts das erste Netzwerkgerät veranlassen, die Schritte des Verfahrens nach einem der Ansprüche 6 bis 10 durchzuführen, oder die bei Ausführung durch einen Prozessor eines dritten Netzwerkgeräts das dritte Netzwerkgerät veranlassen, die Schritte des Verfahrens nach Anspruch 12 durchzuführen.

15. Computerprogrammprodukt, Computerprogrammcode umfassend, der bei Ausführung durch einen Prozessor eines Endgeräts das Endgerät veranlasst, die Schritte des Verfahrens nach einem der Ansprüche 1 bis 4 durchzuführen, oder der bei Ausführung durch einen Prozessor eines ersten Netzwerkgeräts das erste Netzwerkgerät veranlasst, die Schritte des Verfahrens nach einem der Ansprüche 6 bis 10 durchzuführen, oder der bei Ausführung durch einen Prozessor eines dritten Netzwerkgeräts das dritte Netzwerkgerät veranlasst, die Schritte des Verfahrens nach Anspruch 12 durchzuführen.

## Revendications

1. Procédé de communication, comportant :
la réception (501), par un terminal, de premières informations envoyées par un premier dispositif de réseau ;
l'envoi (504), par le terminal, de deuxièmes informations à un troisième dispositif de réseau après que le terminal est entré dans un état inactif de contrôle de ressources radioélectriques, RRC, les deuxièmes informations étant déterminées par le terminal sur la base des premières informations, les deuxièmes informations étant utilisées pour indiquer au troisième dispositif de réseau qu'il convient d'obtenir des informations de contexte du terminal à partir d'un deuxième dispositif de réseau, et une distance de communication entre le deuxième dispositif de réseau et le troisième dispositif de réseau étant inférieure à une distance de communication entre le troisième dispositif de réseau et le premier dispositif de réseau ; et
l'établissement (507), par le terminal, d'une connexion de communication vers le troisième dispositif de réseau,
le premier dispositif de réseau, le deuxième dispositif de réseau et le troisième dispositif de réseau étant tous des satellites.

2. Procédé de communication selon la revendication 1, les informations de contexte dans le deuxième dispositif de réseau étant envoyées par le premier dispositif de réseau, ou étant envoyées par le premier dispositif de réseau via un ou plusieurs cinquièmes dispositifs de réseau, le ou les cinquièmes dispositifs de réseau étant des dispositifs de réseau situés entre le premier dispositif de réseau et le deuxième dispositif de réseau.

3. Procédé de communication selon la revendication 1 ou 2, le procédé comportant en outre, avant l'envoi, par le terminal, de deuxièmes informations à un troisième dispositif de réseau après que le terminal est entré dans un état inactif de contrôle de ressources radioélectriques, RRC :
la détermination (502), par le terminal, des deuxièmes informations sur la base des premières informations si le terminal obtient un message de radiorecherche par le biais d'une surveillance ou si le terminal doit envoyer une signalisation ou des données.

4. Procédé de communication selon la revendication 3, aussi bien les premières informations que les deuxièmes informations comportant un identifiant du premier dispositif de réseau et des troisièmes informations, et les troisièmes informations comportant des informations d'emplacement du terminal ou des informations concernant un instant auquel le terminal entre dans l'état inactif de RRC.

5. Terminal, comportant un processeur, configuré pour exécuter un programme stocké dans une mémoire, le terminal étant, lorsque le programme est exécuté, amené à réaliser :
le procédé selon l'une quelconque des revendications 1 à 4.

6. Procédé de communication, comportant :
l'envoi (501), par un premier dispositif de réseau, de premières informations à un terminal, les premières informations étant utilisées par le terminal pour déterminer des deuxièmes informations qui sont utilisées pour indiquer à un troisième dispositif de réseau qu'il convient d'obtenir des informations de contexte du terminal à partir d'un deuxième dispositif de réseau, une distance de communication entre le deuxième dispositif de réseau et le troisième dispositif de réseau étant inférieure à une distance de communication entre le troisième dispositif de réseau et le premier dispositif de réseau, et le troisième dispositif de réseau étant un dispositif de réseau connecté au terminal après que le terminal est entré dans un état connecté de RRC à partir d'un état inactif de RRC :
et après que le terminal est entré dans l'état inactif de RRC, l'envoi (502), par le premier dispositif de réseau, des informations de contexte du terminal au deuxième dispositif de réseau, ou l'envoi (502), par le premier dispositif de réseau, des informations de contexte du terminal au deuxième dispositif de réseau via un ou plusieurs cinquièmes dispositifs de réseau, le ou les cinquièmes dispositifs de réseau étant des dispositifs de réseau situés entre le premier dispositif de réseau et le deuxième dispositif de réseau,
le premier dispositif de réseau, le deuxième dispositif de réseau et le troisième dispositif de réseau étant tous des satellites.

7. Procédé de communication selon la revendication 6, les premières informations comportant un identifiant du premier dispositif de réseau et des troisièmes informations ; et
les troisièmes informations comportant des informations d'emplacement du terminal ou des informations concernant un instant auquel le terminal entre dans l'état inactif de RRC.

8. Procédé de communication selon la revendication 6, si le premier dispositif de réseau envoie les informations de contexte du terminal au deuxième dispositif de réseau via le ou les cinquièmes dispositifs de réseau, le premier dispositif de réseau envoyant des quatrièmes informations au(x) cinquième(s) dispositif(s) de réseau, les quatrièmes informations étant utilisées pour indiquer au(x) cinquième(s) dispositif(s) de réseau qu'il convient d'envoyer les informations de contexte du terminal au deuxième dispositif de réseau.

9. Procédé de communication selon la revendication 8, les quatrièmes informations comportant un laps de temps et un identifiant de dispositif de réseau correspondant au laps de temps, et l'identifiant de dispositif de réseau comportant un identifiant du deuxième dispositif de réseau.

10. Procédé de communication selon la revendication 8, les quatrièmes informations comportant des informations d'emplacement du terminal, ou les quatrièmes informations comportant un identifiant du premier dispositif de réseau et des informations concernant un instant auquel le terminal entre dans l'état inactif de RRC.

11. Premier dispositif de réseau, comportant un processeur, configuré pour exécuter un programme stocké dans une mémoire, le premier dispositif de réseau étant, lorsque le programme est exécuté, amené à réaliser :
le procédé selon l'une quelconque des revendications 6 à 10.

12. Procédé de communication, comportant :
la réception (504), par un troisième dispositif de réseau, de deuxièmes informations envoyées par un terminal, les deuxièmes informations comportant un identifiant d'un premier dispositif de réseau et des troisièmes informations, le premier dispositif de réseau étant un dispositif de réseau connecté au terminal avant que le terminal n'entre dans un état inactif de RRC, et les troisièmes informations comportant des informations d'emplacement du terminal ou des informations concernant un instant auquel le terminal entre dans l'état inactif de RRC ;
la détermination, par le troisième dispositif de réseau sur la base des deuxièmes informations, d'un deuxième dispositif de réseau qui stocke des informations de contexte du terminal ;
l'obtention (506), par le troisième dispositif de réseau, des informations de contexte du terminal à partir du deuxième dispositif de réseau, une distance de communication entre le deuxième dispositif de réseau et le troisième dispositif de réseau étant inférieure à une distance de communication entre le troisième dispositif de réseau et le premier dispositif de réseau ; et
l'établissement (507), par le troisième dispositif de réseau, d'une connexion de communication vers le terminal,
le premier dispositif de réseau, le deuxième dispositif de réseau et le troisième dispositif de réseau étant tous des satellites.

13. Troisième dispositif de réseau, comportant un processeur, configuré pour exécuter un programme stocké dans une mémoire, le troisième dispositif de réseau étant, lorsque le programme est exécuté, amené à réaliser :
le procédé selon la revendication 12.

14. Support de stockage lisible par ordinateur, comportant des instructions qui, lorsqu'elles sont exécutées par un processeur d'un terminal, amènent le terminal à réaliser les étapes du procédé selon l'une quelconque des revendications 1 à 4, ou qui, lorsqu'elles sont exécutées par un processeur d'un premier dispositif de réseau, amènent le premier dispositif de réseau à réaliser les étapes du procédé selon l'une quelconque des revendications 6 à 10, ou qui, lorsqu'elles sont exécutées par un processeur d'un troisième dispositif de réseau, amènent le troisième dispositif de réseau à réaliser les étapes du procédé selon la revendication 12.

15. Produit programme informatique comprenant du code de programme informatique qui, lorsqu'il est exécuté par un processeur d'un terminal, amène le terminal à réaliser les étapes du procédé selon l'une quelconque des revendications 1 à 4, ou qui, lorsqu'il est exécuté par un processeur d'un premier dispositif de réseau, amène le premier dispositif de réseau à réaliser les étapes du procédé selon l'une quelconque des revendications 6 à 10, ou qui, lorsqu'il est exécuté par un processeur d'un troisième dispositif de réseau, amène le troisième dispositif de réseau à réaliser les étapes du procédé selon la revendication 12.
